# EUROPEAN PATENT SPECIFICATION

(11) **EP 4 056 425 B1**
(45) Date of publication and mention of the grant of the patent: **12.03.2025**
(21) Application number: 20895153.3
(22) Date of filing: 12.10.2020
(51) Int. Cl.: B60R 1/06, B62J 29/00, B62J 50/22

(54) **LEANING VEHICLE**
NEIGEFAHRZEUG
VÉHICULE INCLINABLE

(30) Priority: 02.12.2019 JP 2019218139
(43) Date of publication of application: 14.09.2022
(73) Proprietor: Yamaha Hatsudoki Kabushiki Kaisha, Iwata-shi, Shizuoka 438-8501 (JP)
(72) Inventor: MAEKAWA, Koji, Iwata-shi, Shizuoka 438-8501 (JP)
(74) Representative: Stöckeler, Ferdinand
(86) International application number: PCT/JP2020/038466
(87) International publication number: WO 2021/111734

(56) References cited:
- EP-A1- 2 130 721
- WO-A1-2017/084790
- WO-A1-2019/171792
- WO-A1-2019/186804
- WO-A1-2019/186804
- WO-A1-2019/186949
- JP-A- 2013 208 996
- JP-A- 2013 208 996
- JP-A- H09 203 640
- US-A1- 2005 088 766
- US-B1- 6 396 394

## Description

### Technical Field

The present teaching relates to a leaning vehicle.

### Background Art

As an example of a leaning vehicle, a motorcycle including a display that displays information is disclosed in Patent Literature 1. The display of Patent Literature 1, for example, provides vehicle information, such as driving assistance information, etc. JP H09 203640 A, which shows the preamble of claim 1, discloses a motorcycle comprising a dashboard on which instruments are arranged in front of a seat of the motorcycle. A heading direction display device, a destination direction display device and a key input device are mounted on the dashboard alongside the instruments. In an embodiment, current position information on a GPS signal are displayed on the dashboard and in another embodiment, the current position information of a GPS signal are displayed by a display device on an upper part of a rearview mirror casing.

### Citation List

### Patent Literature

Patent Literature 1: Japanese Patent Application Publication No. 2013-208996

### Summary of Invention

### Technical Problem

The display of Patent Literature 1, for example, displays vehicle information about the vehicle to the rider. At present, it is studied how to display vehicle information in various kinds of vehicles. It is desired that a leaning vehicle is small and light. Accordingly, there is only a limited space for display of vehicle information to the rider. For example, Patent Literature 1 suggests a means for displaying information on the rear-view mirror of the leaning vehicle. In the leaning vehicle of Patent Literature 1, which provides vehicle information, the means constrains enlargement of the rear-view mirror, which serves as a vehicle information display.

Even so, it is desired that a variety of vehicle information be displayed as vehicle information.

An object of the present teaching is to provide a leaning vehicle capable of displaying various vehicle information.

### Solution to the Problem

The leaning vehicle of Patent Literature 1 displays vehicle information on a part of the mirror surface of the rear-view mirror. In the vehicle of Patent Literature 1, however, the area where the vehicle information is displayed is small, which makes it difficult to display many kinds of vehicle information. Then, the inventor conducted a study on how to display a variety of vehicle information. Showing various kinds of data may be a possible way to display a variety of vehicle information. However, showing various kinds of data, for example, on the rear-view mirror usually requires an increase in the size of the rear-view mirror.

In order to avoid an increase in the size of the rear-view mirror, for example, another display portion may be provided in any other place than the mirror surface of the rear-view mirror. For example, it is possible that a display may be additionally provided on the top face of the rear-view mirror. If a display was additionally provided on the top face of the rear-view mirror of the leaning vehicle, this display would be visible also from an in-front position with respect to the forward-backward direction of the leaning vehicle. If vehicle information was displayed on a position that is visible also from an in-front position with respect to the forward-backward direction of the leaning vehicle, there would be some cases in which it would be difficult to recognize the state of the leaning vehicle from an in-front position of the leaning vehicle, depending on the way of displaying the vehicle information. For example, if the vehicle information was displayed in the same color as lighting of the stop lamp or blinking of the direction indicator lamp, it would be difficult to recognize the state of the leaning vehicle accurately from an in-front position of the leaning vehicle. If a display was additionally provided on the top face of the rear-view mirror of the leaning vehicle, vehicle information could be displayed only in a limited manner. Thus, in view of recognizability of the state of the leaning vehicle from an in-front position of the leaning vehicle, it would not be easy to make it possible to display a variety of vehicle information.

The inventor further studied how to display a variety of vehicle information. From the study, the inventor drew the following conclusion: by equipping the leaning vehicle with two display portions located in places that are not visible from an in-front position of the leaning vehicle and by configuring the display portions such that display visualizations displayed on the display portions at the same time deliver a piece of vehicle information, it is possible to deliver a variety of vehicle information.

Additionally, the inventor found that it is possible to display more various vehicle information in the leaning vehicle by locating the two displays within a region of space (i) or (ii) of the leaning vehicle defined as follows.

The region of space (i) is defined by the overlap among the following regions (ia) to (ic):
(ia) a region that is, with respect to the upward-downward direction of the leaning vehicle, more upward than the upper end of the meter;
(ib) a region that is either one section or two adjacent sections of four sections into which an area that is, with respect to the leftward-rightward direction of the leaning vehicle, more rightward than the left end of the left rear-view mirror and more leftward than the right end of the right rear-view mirror is divided equally in the leftward-rightward direction; and
(ic) a region that is, with respect to the forward-backward direction of the leaning vehicle, more frontward than the front end of the seat.

The region of space (ii) is defined by the overlap between the following regions (iia) and (iib):
(iia) either a region that is, with respect to the leftward-rightward direction of the leaning vehicle, more rightward than the left end of the left rear-view mirror and more leftward than the left end of the meter or a region that is, with respect to the leftward-rightward direction of the leaning vehicle, more leftward than the right end of the right rear-view mirror and more rightward than the right end of the meter; and
(iib) the region that is, with respect to the frontward-backward direction of the leaning vehicle, more frontward than the front end of the seat.

In order to attain the above-mentioned object, a leaning vehicle according to an aspect of the present teaching is configured as follows.

The leaning vehicle (1) includes:
a seat to be sat on by a rider of the leaning vehicle;
a meter that is located more frontward than a front end of the seat with respect to a forward-backward direction of the leaning vehicle, and is configured to display a state upon running of the leaning vehicle;
a left rear-view mirror that is located more leftward than a center of the leaning vehicle with respect to a leftward-rightward direction of the leaning vehicle, and is configured to permit the rider to see places in the back of the leaning vehicle with respect to the forward-backward direction of the leaning vehicle;
a right rear-view mirror that is located more rightward than a center of the leaning vehicle with respect to the leftward-rightward direction of the leaning vehicle, and is configured to permit the rider to see places in the back of the leaning vehicle with respect to the forward-backward direction of the leaning vehicle;
a first display portion and a second display portion that are constituted by different types of displays and are both located in the leaning vehicle, in a region of space (i) or (ii) as defined below, in such a manner as not to be visible from an in-front position but as to be visible from a rearward position with respect to the forward-backward direction of the leaning vehicle, and are configured to display a first display visualization and a second display visualization, respectively, at the same time to deliver a piece of vehicle information in tandem;
wherein:
   the region of space (i) is defined by the overlap among:
      a region that is more upward than an upper end of the meter with respect to the upward-downward direction of the leaning vehicle;
      a region that is either one section or two adjacent sections of four equal sections into which an area that is, with respect to the leftward-rightward direction of the leaning vehicle, more rightward than a left end of the left rear-view mirror and more leftward than a right end of the right rear-view mirror is divided in the leftward-rightward direction; and
      a region that is more frontward than a front end of the seat with respect to the forward-backward direction of the leaning vehicle; and
   the region of space (ii) is defined by the overlap between:
      either a region that is, with respect to the leftward-rightward direction of the leaning vehicle, more rightward than the left end of the left rear-view mirror and more leftward than a left end of the meter, or a region that is, with respect to the leftward-rightward direction of the leaning vehicle, more leftward than the right end of the right rear-view mirror and more rightward than a right end of the meter; and
      the region that is more frontward than the front end of the seat with respect to the forward-backward direction of the leaning vehicle.

The leaning vehicle of (1) includes a seat, a meter, a left rear-view mirror, a right rear-view mirror, a first display portion, and a second display portion.

A rider of the leaning vehicle sits on the seat.

The meter is located more frontward than the front end of the seat with respect to the forward-backward direction of the leaning vehicle, and is configured to display a state upon running of the leaning vehicle.

The left rear-view mirror is located more leftward than the center of the leaning vehicle with respect to the leftward-rightward direction of the leaning vehicle. The right rear-view mirror is located more rightward than the center of the leaning vehicle with respect to the leftward-rightward direction of the leaning vehicle. The left rear-view mirror and the right rear-view mirror are used by the rider to see the situation behind the leaning vehicle with respect to the forward-backward direction of the leaning vehicle.

The first display portion and the second display portion are not visible from an in-front position but are visible from a rearward position with respect to the forward-backward direction of the leaning vehicle, and the first display portion and the second display portion display a first display visualization and a second display visualization, respectively, at the same time to deliver a piece of vehicle information in tandem.

The first display portion and the second display portion are both located in the leaning vehicle, in a region of space (i) or (ii) as defined below.

The region of space (i) is defined by the overlap among:
a region that is more upward than the upper end of the meter with respect to the upward-downward direction of the leaning vehicle;
a region that is either one section or two adjacent sections of the four sections into which an area that is, with respect to the leftward-rightward direction of the leaning vehicle, more rightward than the left end of the left rear-view mirror and more leftward than the right end of the right rear-view mirror is divided equally in the leftward-rightward direction; and
a region that is more frontward than the front end of the seat with respect to the forward-backward direction of the leaning vehicle.

The region of space (ii) is defined by the overlap between:
either a region that is, with respect to the leftward-rightward direction of the leaning vehicle, more rightward than the left end of the left rear-view mirror and more leftward than the left end of the meter, or a region that is, with respect to the leftward-rightward direction of the leaning vehicle, more leftward than the right end of the right rear-view mirror and more rightward than the right end of the meter; and
the region that is more frontward than the front end of the seat with respect to the forward-backward direction of the leaning vehicle.

In the leaning vehicle with this structure, the first display portion and the second display portion are both located in the region of space (i) or (ii). This structure of the leaning vehicle makes it possible to display the first display visualization and the second display visualization close to each other. In the leaning vehicle with this structure, the first display visualization and the second display visualization that are displayed on the first display portion and the second display portion, respectively, at the same time to deliver a piece of information. Thus, the leaning vehicle with this structure can display a first kind of data and a second kind of data at the same time in adjacent places. Then, this leaning vehicle can deliver a variety of vehicle information by various combinations of first display visualization and second display visualization. Hence, the leaning vehicle with the above-described structure can display various vehicle information.

A leaning vehicle according to another aspect of the present teaching may be configured as follows.

The leaning vehicle (2) is the leaning vehicle of (1), wherein
the region of space (ii) is defined by the overlap among:
either the region that is, with respect to the leftward-rightward direction of the leaning vehicle, more rightward than the left end of the left rear-view mirror and more leftward than the left end of the meter, or the region that is, with respect to the leftward-rightward direction of the leaning vehicle, more leftward than the right end of the right rear-view mirror and more rightward than the right end of the meter;
a region that is more upward than the upper end of the meter with respect to the upward-downward direction of the leaning vehicle; and
the region that is more frontward than the front end of the seat with respect to the forward-backward direction of the leaning vehicle.

In the leaning vehicle with this structure, the first display portion and the second display portion are located neither on the same level with the meter nor under the meter. This leaning vehicle can display a variety of vehicle information in such a manner as to permit the rider to see and understand the information more easily without shifting his or her gaze.

A leaning vehicle according to another aspect of the present teaching may be configured as follows.

The leaning vehicle (3) is the leaning vehicle of (1) or (2), wherein
the first display portion and the second display portion are located such that when the leaning vehicle is moving straight ahead and the rider is looking ahead in the direction of movement of the leaning vehicle, the first display portion and the second display portion are within a range of 50 degrees in the rider's visual field.

In the leaning vehicle with this structure, the first display portion and the second display portion are located such that when the leaning vehicle is moving straight ahead and the rider is looking ahead in the direction of movement of the leaning vehicle, the first display portion and the second display portion are within a range of 50 degrees in the rider's visual field. With this arrangement, when the leaning vehicle is moving straight ahead and the rider is looking ahead in the direction of movement of the leaning vehicle, the rider is aware of the presence of information displayed on the first display portion and the second display portion. Thus, the leaning vehicle with this structure can display a first kind of data and a second kind of data at the same time and close to each other in an area where the rider can be aware of the presence of information when the rider is looking ahead in the direction of movement of the leaning vehicle.

A leaning vehicle according to another aspect of the present teaching may be configured as follows.

The leaning vehicle (4) is any one of the leaning vehicles of (1) to (3), wherein
the first display portion and the second display portion are located such that when the rider looks at the first display portion while sitting on the seat, the second display portion and its background beyond are within a range of 15 degrees in the rider's visual field or such that when the rider looks at the second display portion while sitting on the seat, the first display portion and its background beyond are within a range of 15 degrees in the rider's visual field.

In the leaning vehicle with this structure, the first display portion and the second display portion are located such that when the rider looks at the first display portion while sitting on the seat, the second display portion and its background beyond are within 15 degrees in the rider's visual field. Alternatively, the first display portion and the second display portion are located such that when the rider looks at the second display portion while sitting on the seat, the first display portion and its background beyond are within a range of 15 degrees in the rider's visual field. Therefore, when the rider of the leaning vehicle looks at the first display portion, the rider can see the information displayed on the second display portion at once only by moving his or her eyes. Alternatively, when the rider of the leaning vehicle looks at the second display portion, the rider can see the information displayed on the first display portion at once only by moving his or her eyes. Thus, the leaning vehicle with this structure can display a variety of vehicle information in a more easily recognizable manner.

A leaning vehicle according to another aspect of the present teaching may be configured as follows.

The leaning vehicle (5) is any one of the leaning vehicles of (1) to (4), wherein
the vehicle information is driving assistance information for the rider.

The leaning vehicle with this structure can display a variety of driving assistance information by various combinations of first display visualization and second display visualization in such a manner that the information is easily viewable and understandable to the rider. Accordingly, the leaning vehicle can display a variety of information to provide driving assistance.

A leaning vehicle according to another aspect of the present teaching may be configured as follows.

The leaning vehicle (6) is any one of the leaning vehicles of (1) to (5), wherein
the second display visualization complements the first display visualization.

The leaning vehicle with this structure can display a variety of information by various combinations of first display visualization displayed on the first display portion and second display visualization displayed on the second display portion.

A leaning vehicle according to another aspect of the present teaching may be configured as follows.

The leaning vehicle (7) is the leaning vehicle of (6), wherein
the first display visualization expresses information visually.

The leaning vehicle with this configuration provides visual information as the first display visualization and thereby provides vehicle information in a more understandable manner.

A leaning vehicle according to another aspect of the present teaching may be configured as follows.

The leaning vehicle (8) is the leaning vehicle of (7), wherein
the first display visualization is a content of information simplified into a symbol.

The leaning vehicle with this configuration displays, as the first display visualization, a symbol that shows the information simply, and thereby provides a variety of vehicle information in a more easily viewable and understandable manner.

A leaning vehicle according to another aspect of the present teaching may be configured as follows.

The leaning vehicle (9) is any one of the leaning vehicles of (1) to (8), wherein:
the first display visualization is a pictogram; and
the second display visualization is an indicator for a pictogram.

The leaning vehicle with this configuration can display a variety of vehicle information by various combinations of a pictogram and an indicator for a pictogram.

A leaning vehicle according to another aspect of the present teaching may be configured as follows.

The leaning vehicle (10) is any one of the leaning vehicles of (1) to (9), wherein
the second display visualization is illuminated more brightly than the first display visualization.

The leaning vehicle with this configuration illuminates the indicator for the pictogram more brightly than the pictogram and thereby displays vehicle information in a more understandable manner.

A leaning vehicle according to another aspect of the present teaching may be configured as follows.

The leaning vehicle (11) is any one of the leaning vehicles of (1) to (10), wherein
the first display portion and the second display portion are both attached to either the left rear-view mirror or the right rear-view mirror, or both mirrors.

In the leaning vehicle with this structure, the first display portion and the second display portion are both attached to either the left rear-view mirror or the right rear-view mirror, or both mirrors. Accordingly, the leaning vehicle of (11) can display a first kind of data and a second kind of data at the same time and close to each other in an area where the rider can be aware of the presence of information when the leaning vehicle is moving straight ahead and the rider is looking ahead in the direction of movement of the leaning vehicle.

A leaning vehicle according to another aspect of the present teaching may be configured as follows.

The leaning vehicle (12) is any one of the leaning vehicles of (1) to (10), wherein:
the leaning vehicle further comprises a windscreen; and
the first display portion and the second display portion are attached to the windscreen.

In the leaning vehicle with this structure, the first display portion and the second display portion are attached to the windscreen. Accordingly, the leaning vehicle of (12) can display a first kind of data and a second kind of data at the same time and close to each other in an area where the driver can be aware of the presence of information when the leaning vehicle is moving straight ahead and the rider is looking ahead in the direction of movement of the leaning vehicle.

A leaning vehicle according to another aspect of the present teaching may be configured as follows.

The leaning vehicle (13) is any one of the leaning vehicles of (1) to (10), wherein:
the leaning vehicle further comprises a windscreen;
the first display portion is attached to either the left rear-view mirror or the right rear-view mirror, or both mirrors; and
the second display portion is attached to the windscreen.

The leaning vehicle with this structure can display a first kind of data and a second kind of data at the same time and close to each other in an area where the driver can be aware of the presence of information when the leaning vehicle is moving straight ahead and the rider is looking ahead in the direction of movement of the leaning vehicle.

A leaning vehicle according to another aspect of the present teaching may be configured as follows.

The leaning vehicle (14) is the leaning vehicle of (11) or (13), wherein
the first display portion is located, with respect to the leftward-rightward direction of the leaning vehicle, more rightward than the left rear-view mirror or alternatively more leftward than the right rear-view mirror.

The leaning vehicle with this structure can display a first kind of data and a second kind of data at the same time and close to each other in an area where the driver can be aware of the presence of information when the leaning vehicle is moving straight ahead and the rider is looking ahead in the direction of movement of the leaning vehicle.

The technical terms used herein are only to specify embodiments and are not to define the present teaching. The term "and/or" used herein includes one of the associated items in a list and all possible combinations of the associated items. Unless otherwise defined, all terms (including technical and scientific terms) used herein have the same meanings as commonly understood by one of ordinary skill in the art to which the present teaching pertains. It should be understood that terms, such as those defined in commonly used dictionaries, should be interpreted as having meanings that are consistent with their meanings in the context of the present disclosure and relevant art and should not be interpreted in an idealized or overly formal sense unless expressly so defined herein. It should be understood that the description of the present teaching discloses a number of techniques and steps. Each of these has an individual benefit, and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims.

In the present description, a new leaning vehicle will be described. In the following paragraphs, for a complete understanding of the present teaching, details of various embodiments will be provided. However, it is clear that one of ordinary skill in the art can carry out the present teaching without having these details of embodiments. The present disclosure should be understood as merely an example of the present teaching, and the present teaching should not be limited to the embodiments described below and/or shown by the drawings.

The leaning vehicle is, for example, a straddled vehicle that is configured to be able to turn in a leaning posture. The straddled vehicle that is configured to be able to turn in a leaning posture is a straddled vehicle that is configured to turn in an inward leaning posture. Thus, the straddled vehicle that is configured to be able to turn in a leaning posture counteracts the centrifugal force applied to the leaning vehicle while the leaning vehicle is turning. The straddled vehicle that is configured to be able to turn in a leaning posture is expected to be frisky, and it is important that the straddled vehicle is highly responsive to a start operation.

The straddled vehicle is a type of vehicle in which a driver takes a seat by straddling the seat. The straddled vehicle is configured to move and turn in accordance with the rider's weight shift. The straddled vehicle includes a handlebar to be held by the rider. The straddled vehicle is configured to be posture-controlled by the rider shifting his or her weight while holding the handlebar in his or her both hands when moving or turning of the straddled vehicle. The straddled vehicle is, for example, a motorcycle of a scooter type, a moped type, an off-road type or an on-road type. The straddled vehicle that is configured to be able to turn in a leaning posture to lean toward the inside of a curve is a kind of leaning vehicle. The leaning vehicle is not necessarily a two-wheeled motor vehicle and may be, for example, a three-wheeled motor vehicle, an ATV (all-terrain vehicle), or the like. The three-wheeled motor vehicle may have two front wheels and one rear wheel, or may have one front wheel and two rear wheels. The drive wheel of the leaning vehicle may be the rear wheel(s) or front wheel(s). The directions of the leaning vehicle mean directions when the leaning vehicle is upright.

The meter is, for example, a display device that indicates a state upon running of the leaning vehicle. The meter may be, for example, a display device that shows the condition of the engine of the leaning vehicle. The meter may be, for example, a speedometer, a tachometer, a fuel gauge, a water temperature gauge or the like; however, the meter is not limited to these kinds of meters. The meter is, for example, an analogue type. Alternatively, the meter is, for example, a digital type. Two or more kinds of meters may be provided as different things, or alternatively, two or more kinds of meters may be provided as one body. The meter is, for example, a display device that displays information at least relating to vehicle speed. When the leaning vehicle includes a rotatory power output device (for example, an engine or a motor) as a power source, the information relating to vehicle speed may include the rotation speed of the power source. The meter is located, for example, at a position passing through the center of the vehicle with respect to the leftward-rightward direction of the vehicle. The meter is located, for example, such that at least part of the meter is between the left end and the right end of the handlebar with respect to the leftward-rightward direction of the vehicle. The meter is located, for example, more frontward than the front end of the seat with respect to the forward-backward direction of the vehicle. The meter includes, for example, a transparent display panel that makes the display device, which indicates a state upon running of the vehicle, viewable from the rider, and a case that covers the display panel and encases the display device. In this case, the upper end of the meter may be the upper end of the display panel or the upper end of the case in the rider's visual field.

The rider of the leaning vehicle uses the rear-view mirrors to see the situation behind the leaning vehicle with respect to the forward-backward direction of the leaning vehicle. The rear-view mirrors are, for example, composed of a right rear-view mirror and a left rear-view mirror, which are used to see the situation on the right rear of the leaning vehicle and the situation on the left rear of the leaning vehicle, respectively, with respect to the forward-backward direction and the leftward-rightward direction of the leaning vehicle; however, the places that the rider sees through the rear-view mirrors are not limited to the places in these directions. The rear-view mirrors through which the rider can see places in the back of the leaning vehicle with respect to the forward-backward direction of the leaning vehicle are, for example, attached to the handlebar or the front fork; however, the rear-view mirrors are not necessarily attached to these things.

The displays may be, for example, LED displays, light-guiding panels, small displays, etc. The small displays may be, for example, small liquid crystal displays; however, the small displays are not limited to this type of display. The statement that the displays are not visible from an in-front position but are visible from a rearward position with respect to the forward-backward direction of the leaning vehicle means that the light sources of the displays, that is, the bright portions of the displays, are not visible directly from an in-front position but are visible directly from a rearward position with respect to the forward-backward direction of the leaning vehicle. For example, even if the light from the light sources of the displays are visible from an in-front position indirectly through reflection on some of the surrounding members or in the air, this is not the case in which the light from the light sources of the displays are visible from an in-front position. The first display portion and the second display portion may be constituted, for example, by different types of displays.

Displaying information is displaying information in a visible manner. Displaying information includes, for example, displaying a symbol and a pictogram. In displaying information, a sound or vibration may be emitted in addition to the display of visual data. Displaying the first display visualization and the second display visualization at the same time means, for example, displaying the first display visualization and the second display visualization in an overlapping manner in terms of time. Displaying the first display visualization and the second display visualization at the same time means, for example, that there is a period of time for which the first display visualization and the second display visualization are displayed at the same time. The following ways of displaying first display visualization and second display visualization are considered as the case in which the first display visualization and the second display visualization are displayed at the same time:
starting to display the first display visualization and the second display visualization at the same moment; and
while displaying one of the first display visualization or the second display visualization, starting to display the other display visualization.

The statement that the first display visualization and the second display visualization displayed at the same time deliver a piece of vehicle information means any one of the following situations:
the first display visualization and the second display visualization semantically or visually relate to each other and deliver a piece of vehicle information;
both the first display visualization and the second display visualization semantically or visually relate to a piece of vehicle information; and
at least either the first display visualization or the second display visualization semantically or visually complements the other display visualization.

For example, when the second display visualization indicates the presence of an object approaching the leaning vehicle and the first display visualization indicates that the object is a vehicle, the first display visualization is considered to complement the second display visualization semantically. For example, when the second display visualization is displayed in an inner area closer to the center of the rider's visual field than the first display visualization and is illuminated more brightly than the first display visualization, the second display visualization is considered to complement the first display visualization visually.

A piece of vehicle information means a piece of information about one incident that occurs while the vehicle is moving. In the above example, when one vehicle is approaching the leaning vehicle, the approach of the vehicle is notified as a piece of vehicle information by the first display visualization and the second display visualization. For example, when the first display visualization shows the approach of one vehicle and the second display visualization shows the approach of another vehicle, the first display visualization and the second display visualization are not considered to deliver a piece of vehicle information.

Displaying a symbol is a way of displaying the contents of the information simply. The symbol includes, for example, a pictogram and a letter string. When the display displays, for example, a symbol, the display, for example, uses LEDs. When the display displays, for example, a symbol, the display may be, for example, a small display. For example, by using a plurality of pictograms, it is possible to display various symbols. The pictograms are, for example, simple graphics. The symbol may be, for example, a simple graphic but is not limited to such a graphic.

The indicator for a pictogram shows the presence or non-presence of information, or the amount of information. For example, the indicator alone does not deliver any meanings of information directly. The indicator indicates the presence or non-presence of some information, for example, by turning on or off the light. The indicator may additionally indicate the degree of importance or emergency of information, for example, by the brightness, color or lighting area. When the display displays an indicator, the display is, for example, a luminescent device. The display, for example, uses LEDs. When the display displays an indicator, the display may use, for example, a light guiding material. For example, by changing the color, the lighting area, and the number and the frequency of flickers, it is possible that the indicator provides various kinds of indications.

The vehicle information is, for example, driving assistance information. The driving assistance information is, for example, information about the relationship between the leaning vehicle itself and another vehicle, such as information obtained, for example, through near field communication about the position, the moving direction, the moving speed, and the like of another vehicle relative to the leaning vehicle itself. The driving assistance information may be information about the state upon running of the leaning vehicle itself, such as the speed, the rate of acceleration, the lean angle, and the like of the leaning vehicle itself. The driving assistance information may be information about the conditions of the engine, the battery, and other parts of the leaning vehicle itself.

### Effect of Invention

The present teaching provides a leaning vehicle capable of displaying various vehicle information.

### Brief Description of Drawings

[FIG. 1] FIG. 1 is an external view showing the structure of a straddled vehicle according to an embodiment of the present teaching.
[FIG. 2] FIG. 2 is an enlarged view of a first display portion and a second display portion contained in the motorcycle shown in FIG. 1.
[FIG. 3] FIG. 3 is a diagram showing examples of first display visualization that can be displayed on the first display portion shown in FIG. 2.
[FIG. 4] FIG. 4 is a diagram showing examples of second display visualization that can be displayed on the second display portion shown in FIG. 2.
[FIG. 5] FIG. 5 is a left side view of the motorcycle shown in FIG. 1.
[FIG. 6] FIG. 6 is a looking-to-the-front external view of an exemplary front portion of the motorcycle shown in FIG. 1 with respect to the frontward-backward direction of the motorcycle and upper portion of the motorcycle shown in FIG. 1 with respect to the upward-downward direction of the motorcycle.
[FIG. 7] FIG. 7 is a looking-to-the-front external view of another exemplary front portion of the motorcycle shown in FIG. 1 with respect to the frontward-backward direction of the motorcycle and an upper portion of the motorcycle in FIG. 1 with respect to the upward-downward direction of the motorcycle.
[FIG. 8] FIG. 8 is a looking-to-the-front external view of another exemplary front portion of the motorcycle shown in FIG. 1 with respect to the frontward-backward direction of the motorcycle and upper portion of the motorcycle shown in FIG. 1 with respect to the upward-downward direction of the motorcycle.
[FIG. 9] FIG. 9 is a diagram showing the visual field of the rider of the motorcycle shown in FIG. 1 when the motorcycle is moving straight ahead and the rider is looking ahead in the direction of movement.
[FIG. 10] FIG. 10 is a diagram showing the visual field of the rider of the motorcycle shown in FIG. 1 when the motorcycle is moving straight ahead and the rider is looking ahead in the direction of movement.
[FIG. 11] FIG. 11 is a diagram showing a standard posture of the rider riding the motorcycle shown in FIG. 1.
[FIG. 12] FIG. 12 is a diagram showing the eye point of the rider riding the motorcycle of FIG. 1.
[FIG. 13] FIG. 13 is a diagram showing the electrical configuration of a device control unit in a control device of the motorcycle shown in FIG. 1.
[FIG. 14] FIG. 14 is a looking-to-the-front external view of another exemplary front portion of the motorcycle shown in FIG. 1 with respect to the frontward-backward direction of the motorcycle and upper portion of the motorcycle shown in FIG. 1 with respect to the upward-downward direction of the motorcycle.
[FIG. 15] FIG. 15 is a looking-to-the-front external view of another exemplary front portion of the motorcycle shown in FIG. 1 with respect to the frontward-backward direction of the motorcycle and upper portion of the motorcycle shown in FIG. 1 with respect to the upward-downward direction of the motorcycle.
[FIG. 16] FIG. 16 is a looking-to-the-front external view of another exemplary front portion of the motorcycle shown in FIG. 1 with respect to the frontward-backward direction of the motorcycle and upper portion of the motorcycle shown in FIG. 1 with respect to the upward-downward direction of the motorcycle.

### Description of Embodiments

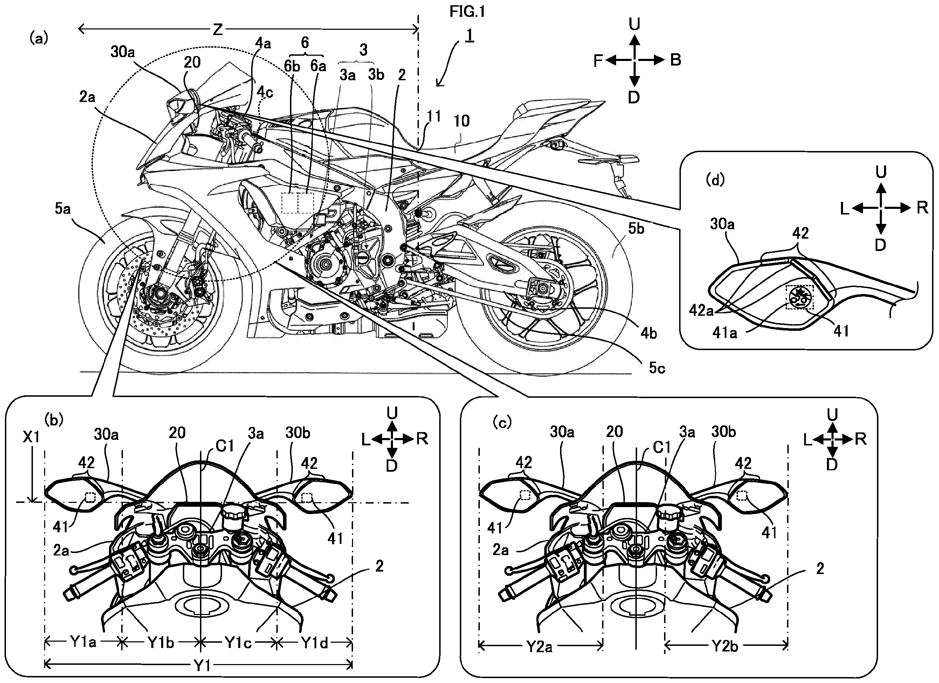

The present teaching will hereinafter be described with reference to the drawings. First, with reference to FIG. 1, a leaning vehicle according to an embodiment of the present teaching will be generally described. FIG. 1 is an external view showing the structure of a motorcycle 1 according to an embodiment of the present teaching. The motorcycle 1 is an example of a leaning vehicle.

Arrow F in FIG. 1 indicates a forward direction of the motorcycle 1. The forward direction is a direction in which the motorcycle 1 moves. Arrow B indicates a backward direction. Arrow F and arrow B indicate the forward-backward direction FB of the motorcycle 1. The forward direction F, the backward direction B and the forward-backward direction FB are parallel to a horizontal plane of the motorcycle 1 in the upright position. Arrow U indicates an upward direction. Arrow D indicates a downward direction. Arrow U and arrow D indicate the upward-downward direction UD of the motorcycle 1. The upward direction U, the downward direction D and the upward-downward direction UD are parallel to a vertical plane of the motorcycle 1 in the upright position. Arrow L and arrow R in parts (b) to (d) of FIG. 1 indicate a rightward direction and a leftward direction, respectively, from the perspective of a rider riding the motorcycle 1. Arrow L and arrow R indicate the leftward-rightward direction LR of the motorcycle 1.

The motorcycle 1 shown in FIG. 1 includes a vehicle body 2, an engine unit 3, a steering handle 4a, a rear arm 4b, a front wheel 5a, and a rear wheel 5b. Part (a) of FIG. 1 is a left side view of the motorcycle 1. The engine unit 3 is located in the vehicle body 2. The engine unit 3 includes an engine 3a and a transmission 3b. The engine 3a is a power source of the motorcycle 1. The transmission 3b shifts gears and outputs the drive force generated by the engine 3a. The steering handle 4a is attached to the vehicle body 2 in such a manner as to be rotatable. The front wheel 5a is attached to the steering handle 4a in such a manner as to be rotatable. The rear arm 4b is attached to the vehicle body 2 in such a manner as to be swingable. The rear wheel 5b is attached to the rear arm 4b in such a manner as to be rotatable. The rear wheel 5b is a drive wheel of the motorcycle 1. The power outputted from the transmission 3b is transmitted to the rear wheel 5b via a power transmission mechanism 5c.

The motorcycle 1 includes a seat 10, a meter 20, a left rear-view mirror 30a, a right rear-view mirror 30b, a first display portion 41, and a second display portion 42. Parts (b) and (c) of FIG. 1 are looking-to-the-front external views of a front portion of the motorcycle 1 with respect to the upward-downward direction UD of the motorcycle 1 and upper portion of the motorcycle 1 with respect to the forward-backward direction FB of the motorcycle 1. Part (d) of FIG. 1 is an enlarged view of the first display portion 41 and the second display portion 42 of the motorcycle 1. The seat 10 is to be sat on by a rider of the motorcycle 1. When the motorcycle 1 is viewed from a leftward (L) or rightward (R) position, the seat 10 is a part of the upper outline of the motorcycle 1. The meter 20 is to display a state upon running of the motorcycle 1. The meter 20 is located more frontward F than the front end 11 of the seat 10 with respect to the forward-backward direction FB of the motorcycle 1. In the present embodiment, the meter 20 includes a speedometer and a tachometer.

The left rear-view mirror 30a is located more leftward L than the center of the motorcycle 1 with respect to the leftward-rightward direction LR. Specifically, in a looking-to-the-front view of the motorcycle 1, the left rear-view mirror 30a is located more leftward L than the centerline C1 of the motorcycle 1 with respect to the leftward-rightward direction LR. The right rear-view mirror 30b is located more rightward R than the center of the motorcycle 1 with respect to the leftward-rightward direction LR. Specifically, in a looking-to-the-front view of the motorcycle 1, the right rear-view mirror 30b is located more rightward R than the centerline C1 of the motorcycle 1 with respect to the leftward-rightward direction LR. The left rear-view mirror 30a and the right rear-view mirror 30b are used by the rider to see places in back of the motorcycle 1 with respect to the forward-backward direction FB of the motorcycle 1. In the present embodiment, the left rear-view mirror 30a and the right rear-view mirror 30b are attached to a vehicle cover 2a over the vehicle body 2.

The first display portion 41 and the second display portion 42 are not visible from a forward (F) position but are visible from a backward (B) position, with respect to the forward-backward direction FB of the motorcycle 1. The first display portion 41 displays first display visualization 41a, and the second display portion 42 displays second display visualization 42a. The first display visualization 41a and the second display visualization 42a that are displayed at the same time on the first display portion 41 and the second display portion 42, respectively, deliver a piece of vehicle information. Specifically, the first display visualization 41a is visual data that indicates the content of information, and the second display visualization 42a complements the first display visualization 41a. In the present embodiment, the second display visualization 42a is an alert that prompts the rider to look at the first display visualization 41a. The rider of the motorcycle 1 is aware of the second display visualization 42a and then sees the first display visualization 41a. The first display portion 41 and the second display portion 42 are located in the leaning vehicle, in a region of space (i) or (ii) as described below.

The motorcycle 1 shown in FIG. 1 includes a control device 6. The control device 6 includes an engine control unit (ECU) 6a and a device control unit 6b. The engine control unit 6a controls fuel injection of the engine 3a, throttle valve opening of the engine 3a, spark plug firing of the engine 3a, etc., in accordance with the rider's operation of an acceleration grip 4c. The device control unit 6b selects a piece of information as the information to be displayed on the first display portion 41 and the second display portion 42, in accordance with the information sent from various antennas (not shown), such as a vehicle-to-vehicle antenna, a road-to-vehicle antenna, etc., and various sensors (not shown) of the motorcycle 1. The device control unit 6b displays the selected information on the first display portion 41 and the second display portion 42.

With reference to part (b) of FIG. 1, the region of space (i) will be described. The region of space (i) is defined by the overlap among regions as described in (ia) to (ic):
(ia) a region X1 that is more upward U than the upper end of the meter 20 with respect to the upward-downward direction UD of the motorcycle 1;
(ib) either one or two adjacent ones of four sections Y1a, Y1b, Y1c and Y1d into which an area Y1 that is, with respect to the leftward-rightward direction LR of the motorcycle 1, more rightward R than the left end of the left rear-view mirror 30a and more leftward L than the right end of the right rear-view mirror 30b is equally divided in the leftward-rightward direction LR; and
(ic) a region Z that is more frontward F than the front end 11 of the seat 10 with respect to the forward-backward direction FB of the motorcycle 1 (see part (a) of FIG. 1).

With reference to part (c) of FIG. 1, the region of space (ii) will be described. The region of space (ii) is defined by the overlap between regions as described in (iia) and (iib):
(iia) either a region Y2a that is, with respect to the leftward-rightward direction LR of the motorcycle 1, more rightward R than the left end of the left rear-view mirror 30a and more leftward L than the left end of the meter 20, or a region Y2b that is, with respect to the leftward-rightward direction LR of the motorcycle 1, more leftward L than the right end of the right rear-view mirror 30b and more rightward R than the right end of the meter 20; and
(iib) the region Z that is more frontward F than the front end 11 of the seat 10 with respect to the forward-backward direction FB of the motorcycle 1 (see part (a) of FIG. 1).

In the motorcycle 1 according to the present embodiment, the first display portion 41 and the second display portion 42 are located in the region of space (i) or the region of space (ii). With this arrangement, the motorcycle 1 according to the present embodiment can show first display data by the first display visualization 41a and second display data by the second display visualization 42a close to each other. In the motorcycle 1 according to the present embodiment, the first display visualization 41a and the second display visualization 42a that are displayed on the first display portion 41 and the second display portion 42, respectively, at the same time deliver a piece of information. Thus, the motorcycle 1 can display two kinds of data at the same time in closely arranged positions. Accordingly, the motorcycle 1 can deliver a variety of vehicle information by showing first display visualization 41a and second display visualization 42a in various combinations. According to the present embodiment, therefore, the motorcycle 1 can deliver various vehicle information.

In the motorcycle 1 according to the present embodiment, moreover, the first display portion 41 and the second display portion 42 are located in the region of space (i) or (ii). With this arrangement, the motorcycle 1 according to the present embodiment can display the first display visualization 41a and the second display visualization 42a within a region where the rider can be aware of the information without glancing aside. Specifically, when the rider of the motorcycle 1 is looking ahead in the direction of movement of the motorcycle 1, the first display portion 41 and the second display portion 42 are in the rider's peripheral visual field, within a region where the rider can see the color and/or motion and can be aware of the information without glancing aside. Since the first display portion 41 and the second display portion 42 are within this region of the peripheral visual field of the rider of the motorcycle 1, the rider can be aware of the first display visualization 41a and the second display visualization 42a without glancing aside. Furthermore, when the first display visualization 41a is simple and symbolic and the second display visualization 42a is complementary to the first display visualization 41a, the rider can understand the information without staring at the first display visualization 41a and the second display visualization 42a.

As described above, in the motorcycle 1, the first display portion 41 and the second display portion 42 are located together in the region of space (i) or (ii), and therefore, the first display visualization 41a that visually indicates information and the second display visualization 42a that complements the first display visualization 41a are displayed close to each other. Specifically, the first display portion 41 and the second display portion 42 are located such that when the rider of the motorcycle 1 looks at the second display portion 42, the first display portion 41 comes in the rider's visual field (at least in the peripheral visual field), within a region where the rider can see the color and/or motion displayed on the first display portion 41 and can be aware of the information without glancing aside. Alternatively, the first display portion 41 and the second display portion 42 are located such that when the rider of the motorcycle 1 looks at the first display portion 41, the second display portion 42 comes in the rider's visual field (at least in the peripheral visual field), within a region where the rider can see the color and/or motion displayed on the second display portion 42 and can be aware of the information without glancing aside. Therefore, when the rider of the motorcycle 1 becomes aware of the second display visualization 42a, the rider can recognize the first display visualization 41a without looking toward the first display visualization 41a.

In the present embodiment, the first display portion 41 and the second display portion 42 are attached to at least either the left rear-view mirror 30a or the right rear-view mirror 30b. Accordingly, either the left rear-view mirror 30a or the right rear-view mirror 30b, or both mirrors 30a and 30b, of the motorcycle 1 according to the present embodiment is located in the above-described region of space (i) or (ii). In the motorcycle 1 according to the present embodiment, the display portion 41 and the display portion 42 are attached together to either the left rear-view mirror 30a or the right rear-view mirror 30b, or both mirrors 30a and 30b, and thus, the first display visualization 41a and the second display visualization 42a can be displayed close to each other.

### [Structure of Displays]

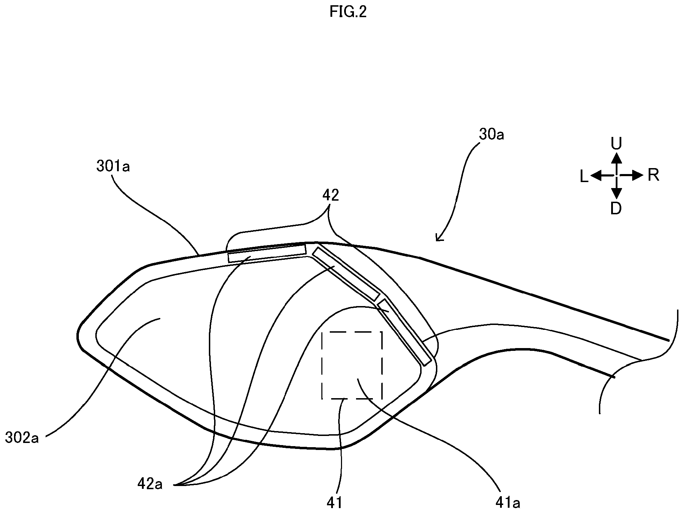

The structure of the first display portion 41 and the second display portion 42 will be described. FIG. 2 is an enlarged view of the first display portion 41 and the second display portion 42 of the motorcycle 1 shown in FIG. 1. In the present embodiment, the display portions 41 and 42 are attached to at least either the left rear-view mirror 30a or the right rear-view mirror 30b, or both mirrors 30a and 30b. FIG. 2 shows a case in which the display portions 41 and 42 are attached to the left rear-view mirror 30a.

In the case of FIG. 2, the first display portion 41 is located in the right part, with respect to the leftward-rightward direction LR, of the mirror surface 302a of the left rear-view mirror 30a (in the part near the center of the motorcycle 1). The first display portion 41 is constituted by a small display that uses LEDs or other light-emitting elements, liquid crystal, or the like. In the present embodiment, the first display visualization 41a displayed on the first display portion 41 is a symbol that shows the content of information simply and visually. More specifically, the first display visualization 41a is a pictogram that indicates the kind of information. For example, the information shown by the first display visualization 41a is, for example, to notify the rider that "a car is coming closer", "an emergency motor vehicle is coming closer", "trouble occurs", or the like. Additionally, the first display visualization 41a can show the conditions of the vehicle, such as the speed and the like, in combination with the second display visualization 42a.

In the case of FIG. 2, the second display portion 42 is located in the right (R) part with respect to the leftward-rightward direction LR and in the upper (U) part with respect to the upward-downward direction UD of the margin 301a of the left rear-view mirror 30a (in the part near the center of the motorcycle 1 with respect to the leftward-rightward direction LR). The second display portion 42 is constituted by one or more LEDs or other light-emitting elements, or a light-guiding belt. The second display visualization 42a displayed on the second display portion 42 is an indicator. The second display visualization 42a shows the degree of emergency or importance of the information indicated by the first display visualization 41a, or the value relating to the information indicated by the first display visualization 41a as the indicator. The second display portion 42, for example, can make a full-color display. The second display portion 42, for example, can turn on the display elements individually. The second display portion 42, for example, can change the frequency of flickers.

The first display portion 41 and the second display portion 42 are located to satisfy the following conditions. First, the first display portion 41 and the second display portion 42 are located in such a manner as not to be visible from a forward (F) position, with respect to the forward-backward direction FB of the motorcycle 1. Next, when the first display portion 41 and the second display portion 42 emit orange or red light, the orange- or red-light is emitted in such a manner as to avoid confusion with a flusher or a brake lamp. Neither the first display portion 41 nor the second display portion 42 emits white light. The first display portion 41a and the second display portion 42 are located in places other than the mirror parts (rear view parts) of the left rear-view mirror 30a and the right rear-view mirror 30b on which the rearward view is reflected.

The first display visualization 41a and the second display visualization 42a that are displayed on the first display portion 41 and the second display portion 42, respectively, at the same time deliver a piece of information. Accordingly, the motorcycle 1 can display various kinds of vehicle information by various combinations of first display visualization 41a and second display visualization 42a. For example, a combination of first display visualization 41a and second display visualization 42a delivers a piece of information on driving assistance to the rider of the motorcycle 1. A specific way of displaying information will be described below.

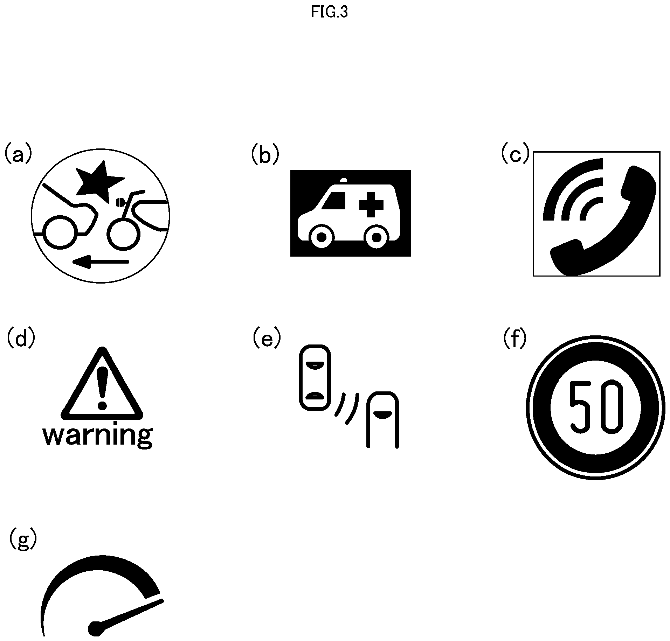

FIG. 3 is a diagram showing examples of first display visualization 41a that can be displayed on the first display portion 41 in FIG. 2. The device control unit 6b selects a pictogram as the data to be displayed on the first display portion 41, in accordance with the information acquired. FIGS. 3(a) to 3(g) are exemplary pictograms that can be displayed on the first display portion 41.

FIG. 3(a) is a pictogram showing that another vehicle is coming closer to the motorcycle 1 itself or that the motorcycle 1 itself is moving in closer to another vehicle. This pictogram is displayed when the vehicle-to-vehicle communication device installed in the motorcycle 1 detects another vehicle approaching the motorcycle 1. Even when the rider of the motorcycle 1 does not realize that another vehicle is approaching the motorcycle 1 or that the motorcycle 1 is approaching another vehicle, this pictogram can notify the rider that the motorcycle 1 is close to another vehicle.

FIG. 3(b) is a pictogram showing that an emergency motor vehicle is coming closer to the motorcycle 1 itself. This pictogram is displayed when the vehicle-to-vehicle communication device installed in the motorcycle 1 detects an emergency motor vehicle coming closer to the motorcycle 1. This pictogram can notify the rider of the motorcycle 1 of the approach of an emergency motor vehicle as the motorcycle 1 needs to give way to the emergency motor vehicle.

FIG. 3(c) is a pictogram showing that there is a call. This pictogram is displayed when a smartphone or the like that is connected to the device control unit 6b mounted on the motorcycle 1 receives a call.

FIG. 3(d) is a pictogram showing that the motorcycle 1 is making an emergency call. In any cases other than the cases of FIGS. 3(a) to 3(g), this pictogram may be displayed when the motorcycle 1 automatically makes an emergency call depending on the evaluation result of a detection value sent from any sensor installed in the motorcycle 1.

FIG. 3(e) is a pictogram relating to blind spot detection. The radar sensor installed in the motorcycle 1 measures the distance between the motorcycle 1 and another vehicle on the left, right or rear of the motorcycle 1, and the speed difference between the motorcycle 1 and the vehicle, and this pictogram of FIG. 3(e) is displayed based on the measurement. This pictogram notifies the rider that there is another vehicle at a blind spot behind the motorcycle 1.

FIG. 3(f) is a pictogram showing the speed limit. This pictogram is displayed when the road-to-vehicle communication device mounted on the motorcycle 1 detects the speed limit of the road where the motorcycle 1 is running. This pictogram notifies the rider of the motorcycle 1 of the speed limit of the road where the motorcycle is running.

FIG. 3(g) is a pictogram showing the vehicle speed. This pictogram is displayed to notify the rider of the motorcycle 1 of the speed of the motorcycle 1 detected by the speed sensor installed in the motorcycle 1. This pictogram notifies the speed of the motorcycle 1 in combination with the second display visualization 42a displayed on the second display portion 42.

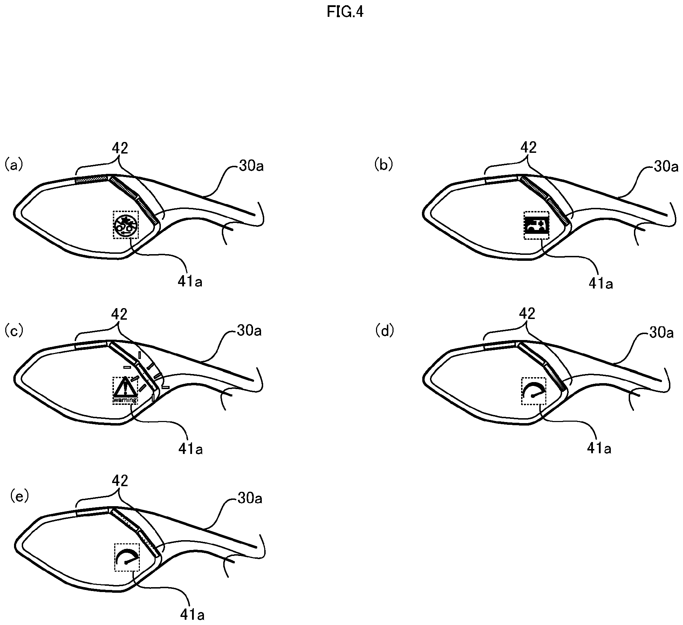

FIG. 4 is a diagram showing examples of second display visualization 42a that can be displayed on the second display portion 42 in FIG. 2. The second display visualization 42a is displayed as the indicator. The second display portion 42 complements the first display visualization 41a displayed on the first display portion 41 as the indicator. Specifically, the device control unit 6b displays an indicator on the second display portion 42 in a manner as will be described below. The second display visualization 42a shows the degree of emergency or importance of the information shown by the first display visualization 41a displayed on the first display potion 41 or the value relating to the information shown by the first display visualization 41a. At the time, the illumination level of the indicator displayed as the second display visualization 42a is higher than the illumination level of the pictogram displayed as the first display visualization 41a. Accordingly, the rider of the motorcycle 1 first becomes aware of the second display visualization 42a and then recognizes the first display visualization 41a displayed near the second display visualization 42a.

A first exemplary way of displaying the second display visualization 42a is the device control unit 6b changing the color of the indicator displayed as the second display visualization 42a to show the degree of emergency and importance of the information shown by the first display visualization 41a displayed on the first display portion 41 (see FIG. 4(a)). For example, the device control unit 6b displays an indicator in an eye-catching color (attention-seeking color). In this way, the motorcycle 1 can notify the rider that the information shown by the first display visualization 41a is of high emergency and high importance. On the other hand, the device control unit 6b displays an indicator in a color that does not draw so much attention. In this way, the motorcycle 1 can notify the rider that the information shown by the first display visualization 41a is of low emergency and low importance.

A second exemplary way of displaying the second display visualization 42a is the device control unit 6b changing the lighting area of the indicator displayed as the second display visualization 42a to show the degree of emergency or importance of the information shown by the first display visualization 41a displayed on the first display portion 41 (see FIG. 4(b)). For example, the device control unit 6b increases the lighting area of the indicator displayed as the second display visualization 42a. In this way, the motorcycle 1 can notify the rider that the information shown by the first display visualization 41a is of high emergency and high importance. On the other hand, the device control unit 6b decreases the lighting area of the indicator displayed as the second display visualization 42a. In this way, the motorcycle 1 can notify the rider that the information shown by the first display visualization 41a is of low emergency and low importance.

A third exemplary way of displaying the second display visualization 42a is the device control unit 6b changing the frequency of flickers of an indicator displayed as the second display visualization 42a to show the degree of emergency and importance of the information shown by the first display visualization 41a displayed on the first display portion 41 (see FIG. 4(c)). For example, the device control unit 6b increases the frequency of flickers of the indicator displayed as the second display visualization 42a. In this way, the motorcycle 1 can notify the rider that the information shown by the first display visualization 41a is of high emergency and high importance. On the other hand, the device control unit 6b decreases the frequency of flickers of the indicator displayed as the second display visualization 42a. In this way, the motorcycle 1 can notify the rider that the information shown by the first display visualization 41a is of low emergency and low importance.

In any of the first to third exemplary ways, the rider can be notified of information that is highly emergent or important. For example, when another vehicle is coming very close to the motorcycle 1, the device control unit 6b shows an indicator in an attention-seeking color as the second display visualization 42a. Thereby, the motorcycle 1 can bring the rider's attention to the pictogram, which means that another vehicle is approaching, displayed on the first display portion 41 (see FIG. 3(a)). Thus, the rider of the motorcycle 1 becomes aware of the indicator displayed on the second display portion 42 and then recognizes the pictogram displayed on the first display portion 41, and in this way, the rider can realize that another vehicle is approaching very close to the motorcycle 1. Alternatively, by the device control unit 6b increasing the lighting area or the frequency of flickers of the second display visualization 42a, the motorcycle 1 can notify the rider that another vehicle is approaching very close to the motorcycle 1.

In any of the first to third exemplary ways, the motorcycle 1 can notify the rider of information while distinguishing highly emergent or important information from information that is not so emergent or important. For example, the device control unit 6b acquires information that an emergency motor vehicle is approaching (FIG. 3(b)), etc., which is less emergent or important than the information that another vehicle is approaching very close to the motorcycle 1 as mentioned above. In this case, the device control unit 6b shows low emergency or importance on the second display portion 42 and displays the pictogram of FIG. 3(b) on the first display portion 41. Specifically, the device control unit 6b displays an indicator on the second display portion 42 in a less attention -seeking color to show less emergency or importance of the information. Alternatively, the device control unit 6b displays an indicator on the second display portion 42 in a smaller lighting area or at a lower frequency of flickers to show less emergency or importance of the information. This second display visualization 42a brings the rider's attention to the first display visualization 41a, and the rider can react to the approach of the emergency motor vehicle. For example, the device control unit 6b acquires information that the smartphone connected to the device control unit 6b receives a call (FIG. 3(c)), etc., which is even less emergent or important than the information as shown by the pictograms of FIG. 3(a) and 3(b), the device control unit 6b may display an indicator that shows far less emergency or importance on the second display portion 42 while displaying the pictogram of 3(c) on the first display portion.

For example, a combination of the pictogram of 3(d) and second display visualization 42a displayed in any of the first to third exemplary ways can show the degree of trouble in the vehicle. For example, when severe trouble occurs in the motorcycle 1, the device control unit 6b displays an indicator that shows high emergency on the second display portion 42. Thereby, the motorcycle 1 can bring the rider's attention to the pictogram displayed on the first display portion 41. On the other hand, when small trouble occurs in the motorcycle 1, the device control unit 6b displays an indicator that shows less emergency or importance on the second display portion 42. Thereby, the motorcycle 1 can bring the rider's attention to the pictogram displayed on the first display portion 41.

For example, a combination of the pictogram of FIG. 3(e) and second display visualization 42a displayed in any of the first to third exemplary ways can notify the rider that there is another vehicle at a blind spot behind the motorcycle 1. For example, when another vehicle is at a blind spot behind the motorcycle 1 while the motorcycle 1 is moving straight ahead, the device control unit 6b displays an indicator that shows low emergency or importance on the second display portion 42 and displays the pictogram of FIG. 3(e) on the first display portion 41. When the rider makes a signal of a left or right turn, a U-turn or a lane change while another vehicle is at a rear blind spot, the motorcycle 1 displays an indicator that shows high emergency or importance on the second display portion 42 and displays the pictogram of FIG. 3(e) on the first display portion 41. In this way, the motorcycle 1 can notify the rider that another vehicle is at a rear blind spot.

For example, a combination of the pictogram of FIG. 3(f) and second display visualization 42a displayed in any of the first to third exemplary ways can notify the rider of the relationship between the speed of the motorcycle 1 and the speed limit of the road where the motorcycle 1 is moving. For example, when the vehicle speed acquired from the vehicle speed sensor installed in the motorcycle 1 is equal to or higher than the speed limit of the road where the motorcycle 1 is moving, the device control unit 6b displays an indicator that shows high emergency and importance on the second display portion 42. At the same time, the device control unit 6b displays the pictogram of FIG. 3(f) on the first display portion 41. Thereby, the motorcycle 1 can bring the rider's attention to the pictogram displayed on the first display portion 41. On the other hand, when the vehicle speed acquired from the vehicle speed sensor installed in the motorcycle 1 is lower than the speed limit of the road where the motorcycle 1 is moving, the device control unit 6b displays an indicator that shows lower emergency and importance on the second display portion 42. Thereby, the motorcycle 1 can bring the rider's attention to the pictogram displayed on the first display portion 41.

A fourth exemplary way of displaying the second display visualization 42a is displaying an indicator gradationally to show a value relating to the information shown by the first display visualization 41a displayed on the first display portion 41 (FIG. 4(d)). The gradational way of displaying is displaying an indicator on the second display portion 42 by color gradation. For example, as shown in FIG. 4(d), an indicator is displayed on the second display portion 42 in such a manner that the color becomes lighter in a farther leftward position L with respect to the leftward-rightward direction LR of the motorcycle 1. In this regard, the device control unit 6b, for example, increases the dark-color area on the second display portion 42. In this way, the second display visualization 42a can indicate that the value relating to the information shown by the first display visualization 41a is high. On the other hand, the device control unit 6b decreases the dark-color area on the second display portion 42. In this way, the second display visualization 42a can indicate that the value relating to the information shown by the first display visualization 41a is low.

A fifth exemplary way of displaying the second display visualization 42a is displaying a bar-like indicator so that the motorcycle 1 can show a value relating to the information shown by the first display visualization 41a displayed on the first display portion 41 (FIG. 4(e)). As shown in FIG. 4(e), by increasing or decreasing the lighting area of the bar-like indicator, it is possible to show a value relating to the information shown by the first display visualization 41a displayed on the first display portion 41. For example, as shown in FIG. 4(e), the lighting area is displayed in such a manner as to increase leftward L on the second display portion 42 or as to decrease rightward R, with respect to the leftward-rightward direction LR of the motorcycle 1. For example, the device control unit 6b increases the lighting area of the indicator. In this way, the second display visualization 42a indicates that the value relating to the information shown by the first display visualization 41a is high. On the other hand, the device control unit 6b decreases the lighting area of the indicator. In this way, the second display visualization 42a indicates that the value relating to the information shown by the first display visualization 41a is low.

For example, a combination of the pictogram of FIG. 3(g) and second display visualization 42a displayed in the fourth or fifth exemplary way can show the vehicle speed. The device control unit 6b displays the pictogram of FIG. 3(g) on the first display portion 41 and displays an indicator that shows a value on the second display portion 42. In this way, the device control unit 6b can show the current vehicle speed. Additionally, the device control unit 6b can show a tachometer by displaying a pictogram indicating the engine speed on the first display portion 41. Moreover, the device control unit 6b can display a fuel gauge by displaying a pictogram indicating the amount of remaining fuel on the first display portion 41.

In the present embodiment, as shown in FIG. 2, the first display portion 41 and the second display portion 42 are attached to either the left rear-view mirror 30a or the right rear-view mirror 30b, or both mirrors 30a and 30b. In the present embodiment, accordingly, the first display visualization 41a shown as a pictogram and the second display visualization 42a shown as an indicator can be displayed close to each other. As described above, the first display visualization 41a and the second display visualization 42a that are displayed at the same time deliver a piece of information. In this way, the motorcycle 1 according to the present embodiment can deliver a variety of vehicle information by various combinations of first display visualization 41a and second display visualization 42a. Thus, the motorcycle 1 according to the present embodiment can display a variety of vehicle information.

### [Locations of Displays]

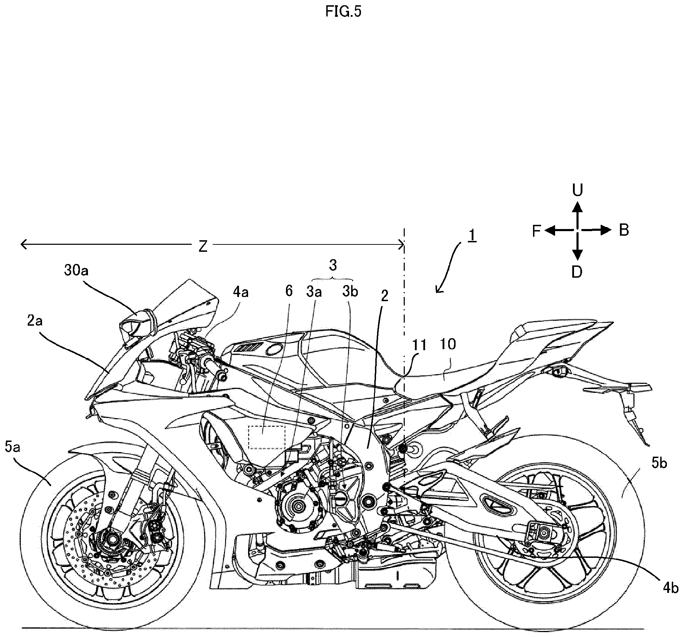

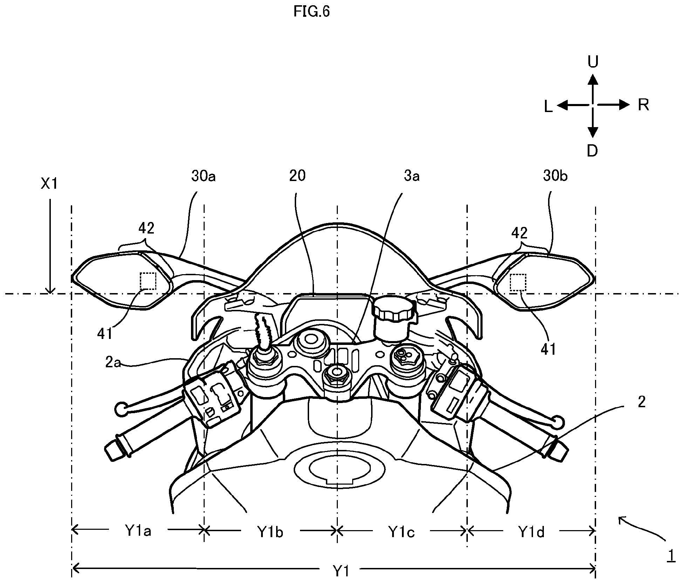

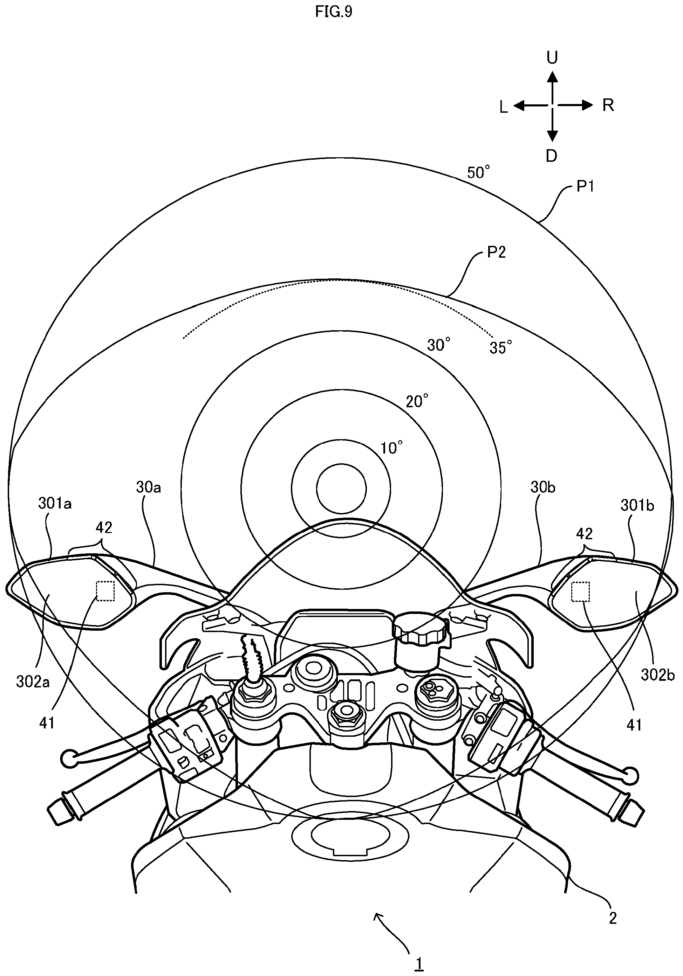

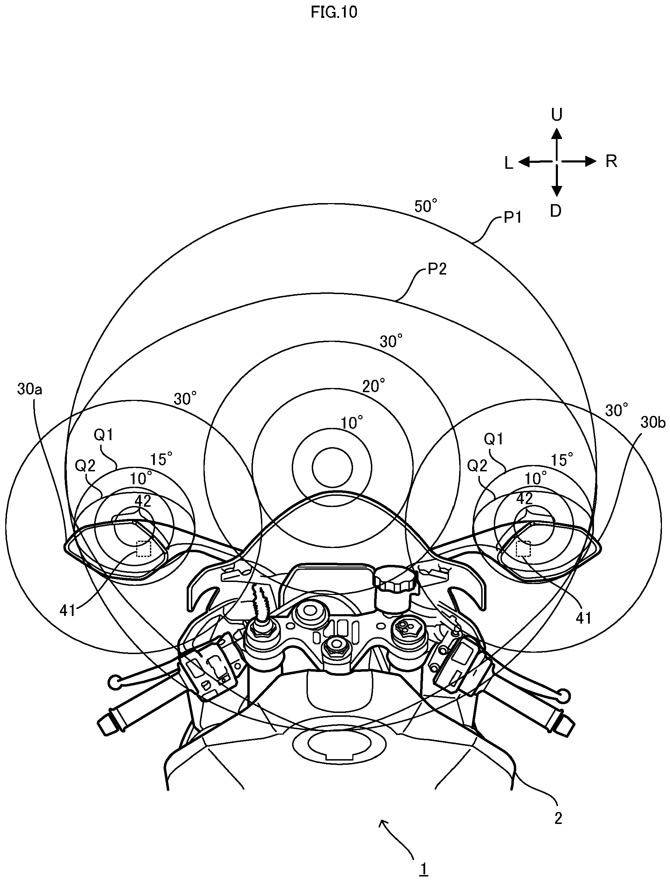

The locations of the first display portion 41 and the second display portion 42 will be described. FIG. 5 is a left side view of the motorcycle 1 shown in FIG. 1. FIGS. 6 to 8 are looking-to-the-front external views of an exemplary front portion of the motorcycle 1 shown in FIG. 1 with respect to the frontward-backward direction FB of the motorcycle 1 and upper portion of the motorcycle 1 shown in FIG. 1 with respect to the upward-downward direction UD of the motorcycle 1. FIGS. 9 and 10 are diagrams showing the visual field of the rider riding the motorcycle 1 shown in FIG. 1 when the motorcycle 1 is moving straight ahead and the rider is looking ahead in the direction of movement. The location of the first display portion 41 and the second display portion 42 of the motorcycle 1 will be described using FIGS. 5 to 10.

The first display portion 41 and the second display portion 42 are located, for example, in a region of space (i) defined by the overlap among regions as described in (ia) to (ic) (see FIGS. 5 and 6):
(ia) a region X1 that is more upward U than the upper end of the meter 20 with respect to the upward-downward direction UD of the motorcycle 1;
(ib) a region that is either one section or two adjacent sections of four sections Y1a, Y1b, Y1c and Y1d into which an area Y1 that is, with respect to the leftward-rightward direction LR of the leaning vehicle 1, more rightward R than the left end of the left rear-view mirror 30a and more leftward L than the right end of the right rear-view mirror 30b is divided equally in the leftward-rightward direction LR; and
(ic) a region Z that is more frontward F than the front end 11 of the seat 10 with respect to the forward-backward FB direction of the motorcycle 1.

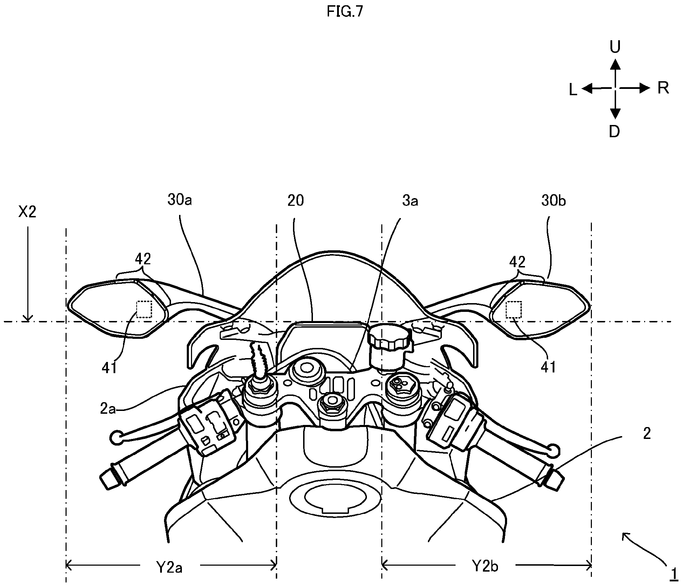

Alternatively, the first display portion 41 and the second display portion 42 are located, for example, in a region of space (ii) defined by the overlap between regions as described in (iia) and (iib) (see FIGS. 5 and 7):
(iia) either a region Y2a that, with respect to the leftward-rightward direction LR of the motorcycle 1, is more rightward R than the left end of the left rear-view mirror 30a and more leftward L than the left end of the meter 20, or a region Y2b that is, with respect to the leftward-rightward direction LR of the motorcycle 1, more leftward L than the right end of the right rear-view mirror 30b and more rightward R than the right end of the meter 20; and
(iib) the region Z that is more frontward F than the front end 11 of the seat 10 with respect to the frontward-backward direction FB of the motorcycle 1.

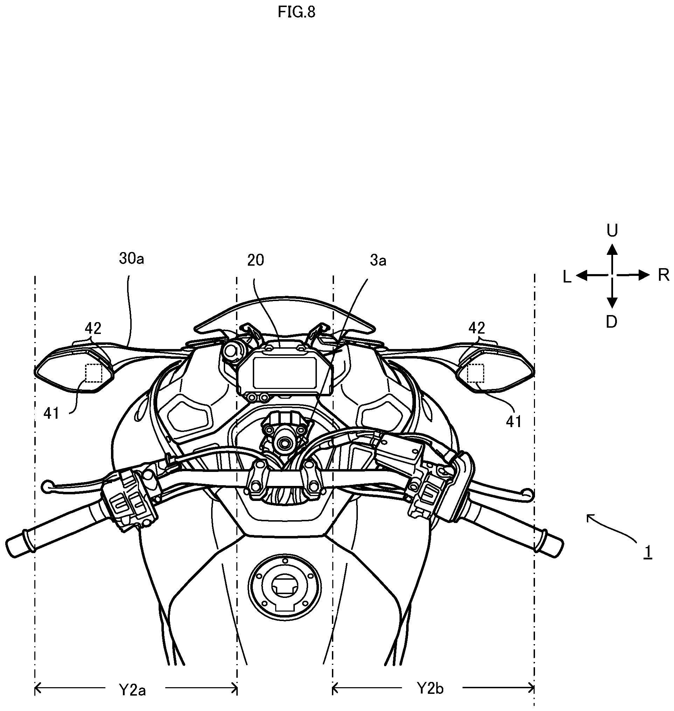

The region of space (ii) is applicable to a type of motorcycle as shown in FIG. 8, in which the left rear-view mirror 30a and the right rear-view mirror 30b are located more downward than the upper end of the meter 20 with respect to the upward-downward direction UD of the motorcycle 1. The region of space (ii) is also applicable even to a type of motorcycle as shown in FIG. 7, in which the left rear-view mirror 30a and the right rear-view mirror 30b are located more upward than the upper end of the meter 20 with respect to the upward-downward direction UD of the motorcycle 1. In this case, the region of space (ii) may be defined by the overlap among not only the regions (iia) and (iib) but also a region as described in (iic);
(iic) a region X2 that is more upward U than the upper end of the meter 20 with respect to the upward-downward direction UD of the motorcycle 1.

Preferably, as shown in FIG. 9, the first display portion 41 and the second display portion 42 are located such that when the motorcycle 1 is moving straight ahead and the rider is looking ahead in the direction of movement, the first display portion 41 and the second display portion 42 are within a range (P1) of 50 degrees in the rider's visual field. More specifically, the first display portion 41 and the second display portion 42 are located such that when the motorcycle 1 is moving straight ahead and the rider is looking in the direction of movement, the first display portion 41 and the second display portion 42 are in the rider's visual field, preferably within a range (P2) of 50 degrees in the leftward (L), rightward (R) and downward (D) directions and 35 degrees in the upward (U) direction. The range (P2) of 50 degrees in the leftward (L), rightward (R) and downward (D) directions and 35 degrees in the upward (U) direction is called a guided visual field. The guided visual field is a part of the rider's peripheral visual field in which the rider can be aware of the presence of information and can see the information effortlessly by complementing his or her eye movement with a head movement. By locating the first display portion 41 and the second display portion 42 in such a range, the rider of the motorcycle 1 can be aware of the presence of information displayed on the first display portion 41 and the second display portion 42 while the motorcycle 1 is moving straight ahead and the rider is looking ahead in the direction of movement. Accordingly, the motorcycle 1 can show the first display visualization 41a and the second display visualization 42a at the same time and close to each other in an area where the rider of the motorcycle 1 can be aware of the presence of information while looking ahead in the direction of movement of the motorcycle 1.

In this regard, as shown in FIG. 10, the second display portion 42 is preferably located such that when the rider of the motorcycle 1 sitting on the seat 10 looks at the first display portion 41, the second display portion 42 comes in the rider's visual field with its background beyond, preferably within a range (Q1) of 15 degrees. More specifically, the second display portion 42 comes in the rider's visual field, preferably within a range (Q2) of 15 degrees in the leftward (L) and rightward (R) directions, 12 degrees in the downward (D) direction and 8 degrees in the upward (U) direction. Alternatively, the first display portion 41 is preferably located such that when the rider of the motorcycle 1 sitting on the seat 10 looks at the second display portion 42, the first display portion 41 comes in the rider's visual field with its background beyond, preferably within a range (Q1) of 15 degrees. More specifically, the first display portion 41 comes in the rider's visual field, preferably within a range (Q2) of 15 degrees in the leftward (L) and rightward (R) directions, 12 degrees in the downward (D) direction and 8 degrees in the upward (U) direction. The range of 15 degrees in the leftward (L) and rightward (R) directions, 12 degrees in the downward (D) direction and 8 degrees in the upward (U) direction is called an effective visual field. The effective visual field is a part of the rider's peripheral visual field in which the rider can see the information only by an eye movement and recognize the specific information instantly. By locating the first display portion 41 and the second display portion 42 in such a range, when the rider of the motorcycle 1 looks at the first display portion 41, the rider can recognize the information displayed on the second display portion 42 instantly only by moving his or her eyes. Alternatively, when the rider of the motorcycle 1 looks at the second display portion 42, the rider can recognize the information displayed on the first display portion 41 instantly only by moving his or her eyes. Accordingly, the motorcycle 1 can show a variety of vehicle information in a more recognizable manner.

In the present embodiment, as shown in FIG. 9, the first display portion 41 and the second display portion 42 are attached together to either the left rear-view mirror 30a or the right rear-view mirror 30b, or both mirrors 30a and 30b that is located in the region of space (i) or (ii) described above. More specifically, when the first display portion 41 and the second display portion 42 are attached to the left rear-view mirror 30a, the first display portion 41 is located in the right part, with respect to the leftward-rightward direction LR, of the mirror surface 302a of the left rear-view mirror 30a. The second display portion 42 is located in the upper (U) part with respect to the upward-downward direction UD and in the right (R) part with respect to the leftward-rightward direction LR, of the margin 301a of the left rear-view mirror 30a. When the first display portion 41 and the second display portion 42 are attached to the right rear-view mirror 30b, the first display portion 41 is located in the left part, with respect to the leftward-rightward direction LR, of the mirror surface 302b of the right rear-view mirror 30b. The second display portion 42 is located in the upper part with respect to the upward-downward direction UD and in the left part with respect to the leftward-rightward direction LR, of the margin 301b of the right rear-view mirror 30b. With this arrangement, as shown in FIG.9, when the rider of the motorcycle 1 is looking ahead in the direction of movement of the motorcycle 1, the first display portion 41 and the second display portion 42 can be in the rider's guided visual field P2. Since the first display portion 41 is in the rider's guided visual field P2, the rider of the motorcycle 1 can be aware of the presence of first display visualization 41a without glancing aside. In the present embodiment, the first display visualization 41a is a simple symbolic pictogram, and the second display visualization 42a is an indicator that complements the first display visualization 41a. Therefore, the rider of the motorcycle 1 understands the information without staring at the first display visualization 41a and the second display visualization 42a.

As shown in FIG. 10, the second display portion 42 is attached to either the left rear-view mirror 30a or the right rear-view mirror 30b, or both mirrors 30a and 30b. Accordingly, when the rider of the motorcycle 1 is looking ahead in the direction of movement of the motorcycle 1, the second display portion 42 is in the rider's guided visual field P2. The first display portion 41 and the second display portion 42 are attached both to either the left rear-view mirror 30a or the right rear-view mirror 30b, or both mirrors. Therefore, when the rider of the motorcycle 1 looks at the second display portion 42, as shown in FIG. 10, the first display portion 41 comes at least in the rider's guided visual field Q1 and preferably in the rider's effective visual field Q2. Alternatively, when the rider of the motorcycle 1 looks at the first display portion 41, as shown in FIG. 10, the second display portion 42 comes at least in the rider's guided visual field Q1 and preferably in the rider's effective visual field Q2. With this arrangement, the rider of the motorcycle 1 can be aware of the presence of the second display visualization 42a without glancing aside, and then when the rider looks at the second display visualization 42a, the rider can obtain the information shown by the first display visualization 41a instantly only by moving his or her eyes.

### [Peripheral Visual Field]

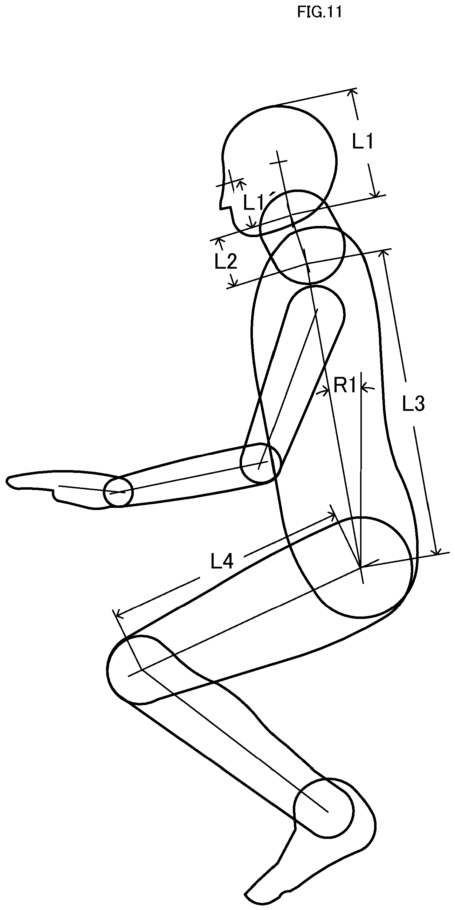

How to settle the peripheral visual field, and the guided visual field and the effective visual field in that range will be described. First, standard dimensions of a rider of the motorcycle 1 are determined. FIG. 11 is a diagram showing a standard riding posture of a rider of the motorcycle 1. The standard dimensions of a rider of the motorcycle 1 are as follows: length of head L1 = 20 cm (height from neck to eyes L1' = 10 cm); length of neck L2 = 10 cm; length of body L3 = 55 cm; length of thighs L4 = 40 cm; and head forward angle R1 = 5 degrees.

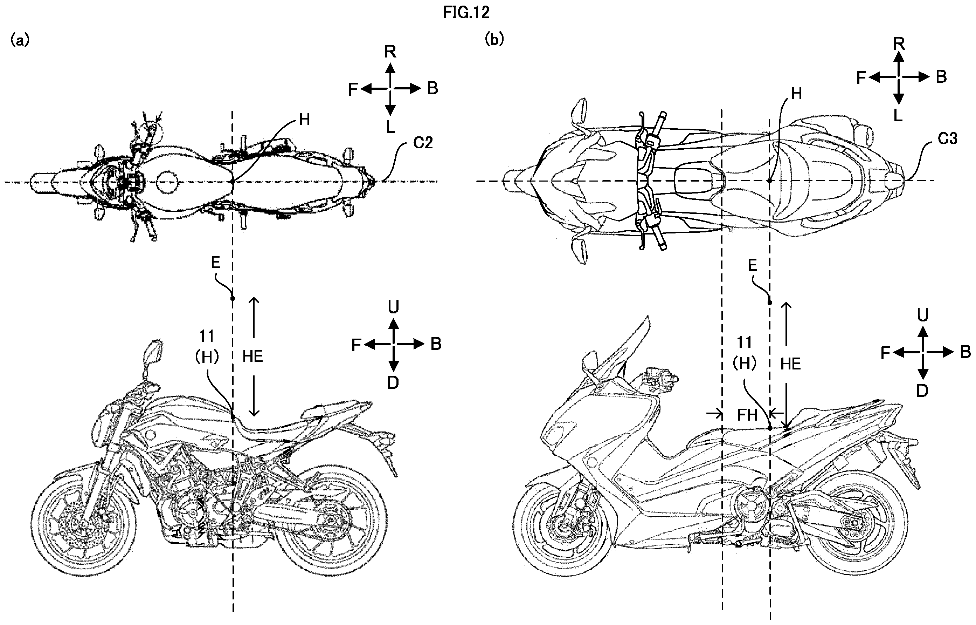

Next, the eye point E of a rider riding the motorcycle 1 is determined. FIG. 12 is a diagram showing the eye point of the rider of the motorcycle 1. The eye point E is the eye point relative to the motorcycle of a rider with the above-described standard dimensions when the rider is looking ahead in the direction of movement of the motorcycle 1. The eye point E is determined as follows depending on the type of the motorcycle 1.
1. In a case in which the motorcycle 1 is a sports-type or street-type vehicle, when the motorcycle 1 is viewed from above, the front end 11 of the seat 10 with respect to the frontward-backward direction FB on the center line C2 of the vehicle with respect to the leftward-rightward direction LR is defined as point H. A point that is 70 cm upward (U) from the point H along the upward-downward direction UD is determined as eye point E (HE = 70 cm).
2. In a case in which the motorcycle 1 is a scooter-type or underbone-type vehicle, when the motorcycle 1 is viewed from above, a point that is 30 cm backward (B) from the front end 11 of the seat 10 with respect to the frontward-backward direction FB on the center line C3 of the vehicle with respect to the leftward-rightward direction LR is defined as point H (FH = 30cm). A point that is 70 cm upward (U) from the point H along the upward-downward direction UD is determined as eye point E (HE = 70 cm).

Next, the peripheral visual field, the guided visual field and the effective visual field are determined. When the rider is looking ahead in the direction of movement of the motorcycle, a range of 100 degrees in the leftward (L) and rightward (R) directions, 75 degrees in the downward (D) direction and 50 degrees in the upward (U) direction from the rider's eye point E is determined as the peripheral visual field. When the rider is looking ahead in the direction of movement of the motorcycle from the rider's eye point E, a range of 50 degrees in the leftward (L), rightward (R) and downward (D) directions and 35 degrees in the upward (U) direction is determined as the guided visual field. The effective visual field is in the peripheral visual field, and when the rider is looking ahead in the direction of movement of the motorcycle, a range of 15 degrees in the leftward (L) and rightward (R) directions, 12 degrees in the downward (D) direction and 8 degrees in the upward (U) direction from the rider's eye point E is determined as the effective visual field.

### [Electrical Configuration]

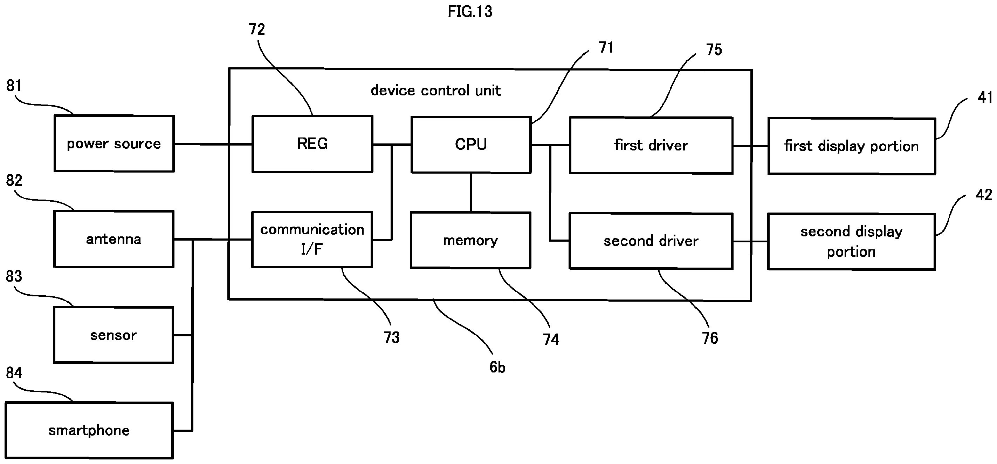

The electrical configuration of the first display portion 41, the second display portion 42, and the device control unit 6b of the control device 6 will be described. FIG. 13 is a diagram showing the electrical configuration of the device control unit 6b of the control device 6. The device control unit 6b includes a central processing unit (CPU) 71, a regulator (REG) 72, a communication interface 73, a memory 74, a first driver 75, and a second driver 76. The CPU 71 is supplied with electric power from a power source 81 via the regulator 72. The power source 81 is, for example, a battery or an electric power generator. The CPU 71 acquires information from antennas 82 and sensors 83 installed in the motorcycle 1 via the communication interface 73. The antennas 82 are, for example, a vehicle-to-vehicle antenna, a road-to-vehicle antenna, etc. The sensors are, for example, a vehicle speed sensor, an engine speed sensor, a radar sensor, etc. Additionally, the CPU 71 is connectable to a smartphone 84 and the like owned by the rider of the motorcycle 1 via the communication interface 73.

The CPU 71 selects a combination of first display visualization 41a and second display visualization 42a from various combinations stored in the memory 74 based on the information acquired, and the CPU 71 sends the first display visualization 41a to the first driver 75 and sends the second display visualization 42a to the second driver. For example, when the antenna 82 detects another vehicle approaching the motorcycle 1, the pictogram of FIG. 3(a) is selected as the first display visualization 41a, and an indicator showing high emergency or importance is selected as the second display visualization 42a. When the smartphone 84 of the rider of the motorcycle 1 receives a call, the pictogram of FIG. 3(c) is selected as the first display visualization 41a, and an indicator showing low emergency or importance is selected as the second display visualization 42a.

The first driver 75 sends information about the first display visualization 41a selected by the CPU 71 to the first display portion 41. The second driver 76 sends information about the second display visualization 42a selected by the CPU 71 to the second display portion 42. In the present embodiment, the first driver 75 and the second driver 76 are included in the device control unit 6b. The first driver 75 and the second driver 76 may be attached to either the left rear-view mirror 30a or the right rear-view mirror 30b, or both mirrors 30a and 30b, close to the first display portion 41 and the second display portion 42.

### [Modifications]

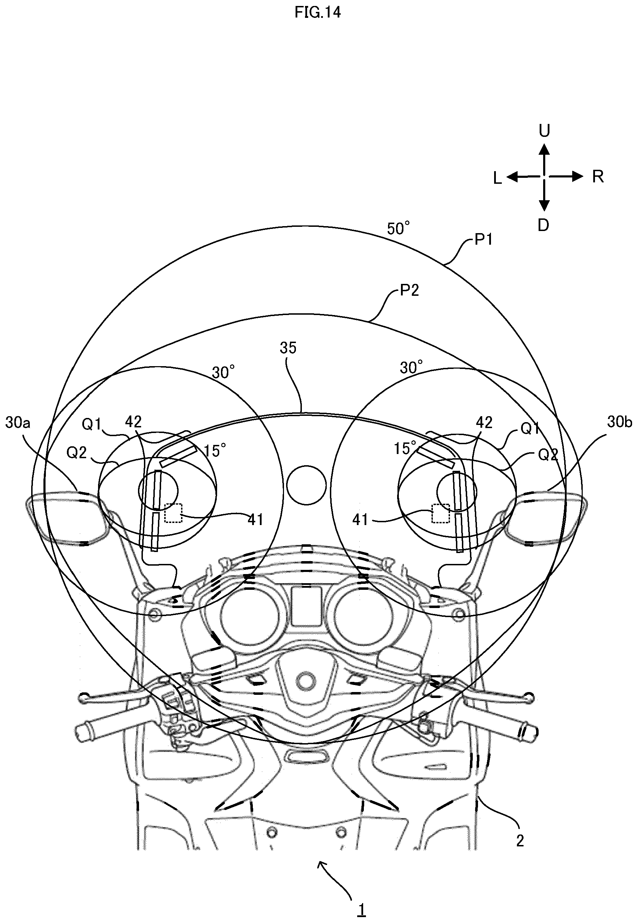

The first display portion 41 and the second display portion 42 are not necessarily attached to either the left rear-view mirror 30a or the right rear-view mirror 30b, or both mirrors 30a and 30b and may be located in any place as follows within the region of space (i) or (ii). For example, the first display portion 41 and the second display portion 42 may be attached to a windscreen 35 of the motorcycle 1. FIG. 14 is a looking-to-the-front external view of another exemplary front portion of the motorcycle 1 with respect to the forward-backward direction FB of the motorcycle 1 and upper portion of the motorcycle 1 with respect to the upward-downward direction UD of the motorcycle 1. In the case of FIG. 14, the first display portion 41 and the second display portion 42 are attached to the windscreen 35 of the motorcycle 1. Accordingly, when the motorcycle 1 is moving straight ahead and the rider is looking ahead in the direction of movement, the first display portion 41 and the second display portion 42 are within the rider's guided visual field P2. When the rider of the motorcycle 1 who is sitting on the seat 10 looks at the first display portion 41, the second display portion 42 comes in the rider's effective visual field Q2. Alternatively, when the rider of the motorcycle 1 who is sitting on the seat 10 looks at the second display portion 42, the first display portion 41 comes in the rider's effective visual field Q2.

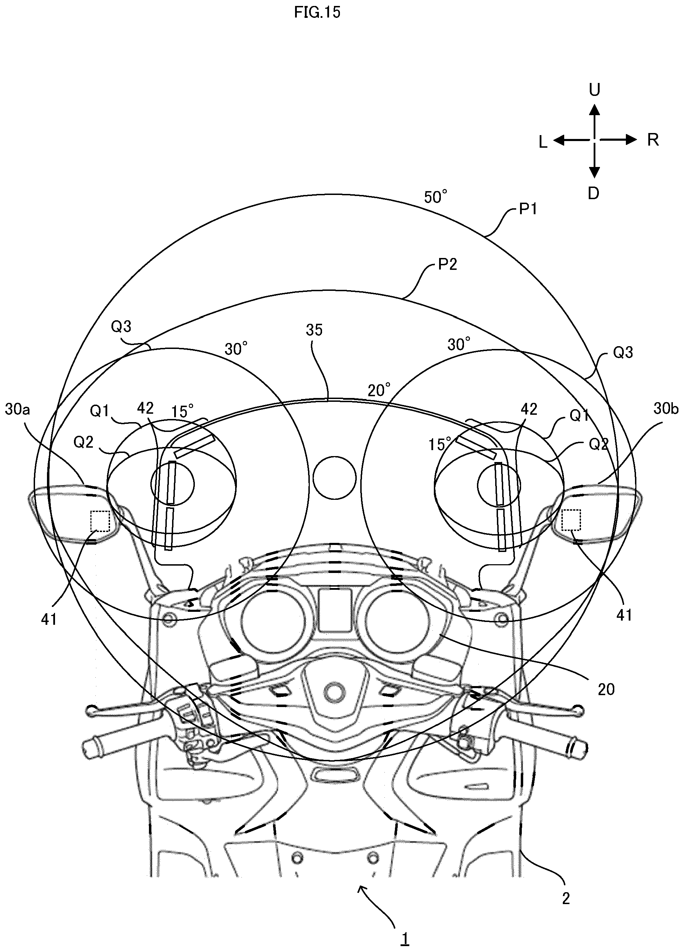

The first display portion 41 and the second display portion 42 may be arranged as follows within the region of space (i) or (ii). For example, the first display portion 41 may be attached to either the left rear-view mirror 30a or the right rear-view mirror 30b, or both mirrors 30a and 30b, and the second display portion 42 may be attached to the windscreen 35 of the motorcycle 1. FIG. 15 is a looking-to-the-front external view of another exemplary front portion of the motorcycle 1 with respect to the forward-backward direction FB of the motorcycle 1 and upper potion with respect to the upward-downward direction UD of the motorcycle 1. In the case of FIG. 15, the first display portion 41 is attached to both the left rear-view mirror 30a and the right rear-view mirror 30b. The second display portion 42 is attached to the windscreen 35 of the motorcycle 1. Therefore, when the motorcycle 1 is moving straight ahead and the rider is looking ahead in the direction of movement, the first display portion 41 and the second display portion 42 are within the rider's guided visual field P2. Additionally, when the rider of the motorcycle 1 who is sitting on the seat 10 looks at the second display portion 42, the first display portion 41 is in the rider's guided visual field (Q3) that is a range of 30 degrees.

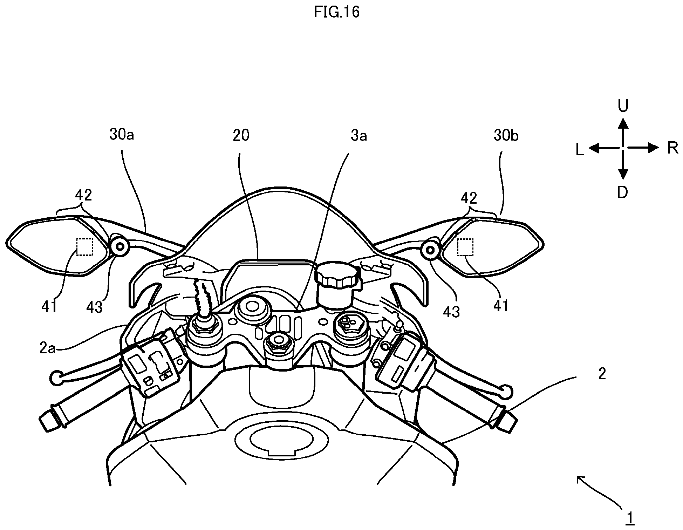

The device control unit 6b of the control device 6 is further capable of providing the rider of the motorcycle 1 with audio information that complements the first display visualization 41a and the second display visualization 42a. For example, a sound, such as a buzzer or the like, is emitted from a speaker. In this case, the motorcycle 1 may have a speaker 43 near the first display portion 41 and the second display portion 42. FIG. 16 is a looking-to-the-front external view of another exemplary front portion of the motorcycle 1 with respect to the forward-backward direction FB of the motorcycle 1 and upper portion of the motorcycle 1 with respect to the upward-downward direction UD of the motorcycle 1. In the case of FIG. 16, the speaker 43 is located near the first display portion 41 and the second display portion 42. Specifically, the speaker 43 is attached to either the left rear-view mirror 30a or the right rear-view mirror 30b, or both mirrors 30a and 30b. In this modification, the motorcycle 1 delivers driving assistance information to the rider through the first display visualization 41a, the second display visualization 42a and the sound. Thus, the motorcycle 1 according to the present modification can display more variety of vehicle information.

### List of Reference Signs

1: motorcycle
2: vehicle body
3: engine unit
4a: steering handle
4b: rear arm
5a: front wheel
5b: rear wheel
6: control device
10: seat
20: meter
30a: left rear-view mirror
30b: right rear-view mirror
41: first display portion
41a: first display visualization
42: second display portion
42a: second display visualization

## Claims

1. A leaning vehicle (1) comprising:
a seat (10) to be sat on by a rider of the leaning vehicle (1);
a meter (20) that is located more frontward than a front end (11) of the seat (10) with respect to a forward-backward direction (FB) of the leaning vehicle (1), and is configured to display a state upon running of the leaning vehicle (1);
a left rear-view mirror (30a) that is located more leftward than a center of the leaning vehicle (1) with respect to a leftward-rightward direction (LR) of the leaning vehicle (1), and is configured to permit the rider to see places in the back of the leaning vehicle (1) with respect to the forward-backward direction (FB) of the leaning vehicle (1);
a right rear-view mirror (30b) that is located more rightward than a center of the leaning vehicle (1) with respect to the leftward-rightward direction (LR) of the leaning vehicle (1), and is configured to permit the rider to see places in the back of the leaning vehicle (1) with respect to the forward-backward direction (FB) of the leaning vehicle (1);
a first display portion (41) and a second display portion (42) that are both located in the leaning vehicle (1), in a region of space (i) or (ii) as defined below, in such a manner as not to be visible from an in-front position but as to be visible from a rearward position with respect to the forward-backward direction (FB) of the leaning vehicle (1), and are configured to display a first display visualization (41a) and a second display visualization (42a), respectively, at the same time to deliver a piece of vehicle information in tandem;
wherein:
the region of space (i) is defined by the overlap among:
a region (X1) that is more upward than an upper end of the meter (20) with respect to the upward-downward direction (UD) of the leaning vehicle (1);
a region that is either one section or two adjacent sections of four equal sections (Y1a, Y1b, Y1c, Y1d) into which an area (Y1) that is, with respect to the leftward-rightward direction (LR) of the leaning vehicle (1), more rightward than a left end of the left rear-view mirror (30a) and more leftward than a right end of the right rear-view mirror (30b) is divided in the leftward-rightward direction (LR); and
a region (Z) that is more frontward than the front end (11) of the seat (10) with respect to the forward-backward direction (FB) of the leaning vehicle (1); and
the region of space (ii) is defined by the overlap between:
either a region (Y2a) that is, with respect to the leftward-rightward direction (LR) of the leaning vehicle (1), more rightward than the left end of the left rear-view mirror (30a) and more leftward than a left end of the meter (20), or a region (Y2b) that is, with respect to the leftward-rightward direction (LR) of the leaning vehicle (1), more leftward than the right end of the right rear-view mirror (30b) and more rightward than a right end of the meter (20); and
the region (Z) that is more frontward than the front end (11) of the seat (10) with respect to the forward-backward direction (FB) of the leaning vehicle (1), **characterised in that** the first display portion (41) and the second display portion (42) are constituted by different types of displays.

2. The leaning vehicle (1) according to claim 1, wherein,
the region of space (ii) is defined by the overlap among:
either the region (Y2a) that is, with respect to the leftward-rightward direction (LR) of the leaning vehicle (1), more rightward than the left end of the left rear-view mirror (30a) and more leftward than the left end of the meter (20), or the region (Y2b) that is, with respect to the leftward-rightward direction (LR) of the leaning vehicle (1), more leftward than the right end of the right rear-view mirror (30b) and more rightward than the right end of the meter (20);
the region (X2) that is more upward than the upper end of the meter (20) with respect to the upward-downward direction (UD) of the leaning vehicle (1); and
the region (Z) that is more frontward than the front end (11) of the seat (10) with respect to the forward-backward direction (FB) of the leaning vehicle (1).

3. The leaning vehicle (1) according to claim 1 or 2, wherein
the first display portion (41) and the second display portion (42) are located such that when the leaning vehicle (1) is moving straight ahead and the rider is looking ahead in the direction of movement of the leaning vehicle (1), the first display portion (41) and the second display portion (42) are within a range of 50 degrees in the rider's visual field, for a rider with the following standard dimensions: length of head = 20 cm, height from neck to eyes = 10 cm, length of neck = 10 cm, length of body = 55 cm, length of thighs = 40 cm, and head forward angle = 5 degrees.

4. The leaning vehicle (1) according to any one of claims 1 to 3, wherein
the first display portion (41) and the second display portion (42) are located such that when the rider looks at the first display portion (41) while sitting on the seat, the second display portion (42) is within a range of 15 degrees in the rider's visual field or such that when the rider looks at the second display portion (42) while sitting on the seat, the first display portion (41) is within a range of 15 degrees in the rider's visual field, for a rider with the following standard dimensions: length of head = 20 cm, height from neck to eyes = 10 cm, length of neck = 10 cm, length of body = 55 cm, length of thighs = 40 cm, and head forward angle = 5 degrees.

5. The leaning vehicle (1) according to any one of claims 1 to 4, wherein
the vehicle information is driving assistance information for the rider, wherein the driving assistance information is either of information about the relationship between the leaning vehicle itself and another vehicle, information about the state upon running of the leaning vehicle, or information about the conditions of parts of the leaning vehicle.

6. The leaning vehicle (1) according to any one of claims 1 to 5, wherein
the second display visualization (42a) complements the first display visualization (41a).

7. The leaning vehicle (1) according to claim 6, wherein
the first display visualization (41a) expresses information visually.

8. The leaning vehicle (1) according to claim 7, wherein
the first display visualization (41a) is a content of information simplified into a symbol.

9. The leaning vehicle (1) according to any one of claims 1 to 8, wherein:
the first display visualization (41a) is a pictogram; and
the second display visualization (42a) is an indicator for the pictogram.

10. The leaning vehicle (1) according to any one of claims 1 to 9, wherein
the second display visualization (42a) is illuminated more brightly than the first display visualization (41a).

11. The leaning vehicle (1) according to any one of claims 1 to 10, wherein
the first display portion (41) and the second display portion (42) are both attached to either the left rear-view mirror (30a) or the right rear-view mirror (30b), or both mirrors.

12. The leaning vehicle (1) according to any one of claims 1 to 10, wherein:
the leaning vehicle (1) further comprises a windscreen (35); and
the first display portion (41) and the second display portion (42) are attached to the windscreen (35).

13. The leaning vehicle (1) according to any one of claims 1 to 10, wherein:
the leaning vehicle (1) further comprises a windscreen (35);
the first display portion (41) is attached to either the left rear-view mirror (30a) or the right rear-view mirror (30b), or both mirrors; and
the second display portion (42) is attached to the windscreen (35).

14. The leaning vehicle (1) according to claim 11 or 13, wherein
the first display portion (41) is located, with respect to the leftward-rightward direction (LR) of the leaning vehicle (1), more rightward than the left rear-view mirror (30a) or alternatively more leftward than the right rear-view mirror (30b).

## Patentansprüche

1. Neigungsfahrzeug (1), das folgende Merkmale aufweist:
einen Sitz (10), auf dem ein Fahrer des Neigungsfahrzeugs (1) sitzen soll;
ein Messgerät (20), das in Bezug auf eine Vorne-Hinten-Richtung (FB) des Neigungsfahrzeugs (1) weiter vorne liegt als ein vorderes Ende (11) des Sitzes (10) und dazu ausgebildet ist, bei Laufenlassen des Neigungsfahrzeugs (1) einen Zustand anzuzeigen;
einen linken Rückspiegel (30a), der in Bezug auf eine Links-Rechts-Richtung (LR) des Neigungsfahrzeugs (1) weiter links liegt als eine Mitte des Neigungsfahrzeugs (1) und dazu ausgebildet ist, es dem Fahrer zu erlauben, Stellen hinter dem Neigungsfahrzeug (1) in Bezug auf die Vorne-Hinten-Richtung (FB) des Neigungsfahrzeugs (1) zu sehen;
einen rechten Rückspiegel (30b), der in Bezug auf die Links-Rechts-Richtung (LR) des Neigungsfahrzeugs (1) weiter rechts liegt als eine Mitte des Neigungsfahrzeugs (1) und dazu ausgebildet ist, es dem Fahrer zu erlauben, Stellen hinter dem Neigungsfahrzug (1) in Bezug auf die Vorne-Hinten-Richtung (FB) des Neigungsfahrzeugs (1) zu sehen;
einen ersten Anzeigeabschnitt (41) und einen zweiten Anzeigeabschnitt (42), die sich beide in dem Neigungsfahrzeug (1) befinden, in einer Region eines Raums (i) oder (ii) wie im Folgenden definiert, auf derartige Weise, dass sie aus einer Davor-Position nicht sichtbar sind, sondern aus einer Rückwärtsposition in Bezug auf die Vorne-Hinten-Richtung (FB) des Neigungsfahrzeugs (1) sichtbar sind, und dazu ausgebildet sind, eine erste Anzeigevisualisierung (41a) bzw. eine zweite Anzeigevisualisierung (42a) gleichzeitig anzuzeigen, um zusammen ein Fahrzuginformationselement zu liefern,
wobei:
die Region von Raum (i) definiert ist durch die Überlappung unter:
einer Region (X1), die in Bezug auf die Auf-Ab-Richtung (UD) des Neigungsfahrzeugs (1) weiter oben liegt als ein oberes Ende des Messgeräts (20);
einer Region, die entweder ein Teil oder zwei benachbarte Teilte von vier gleichen Teilen (Y1a, Y1b, Y1c, Y1d) ist, in die ein Bereich (Y1), der in Bezug auf die Links-Rechts-Richtung (LR) des Neigungsfahrzeugs (1) weiter rechts liegt als ein linkes Ende des linken Rückspiegels (30a) und weiter links liegt als ein rechtes Ende des rechten Rückspiegels (30b), in der Links-Rechts-Richtung (LR) unterteilt ist; und
einer Region (Z), die in Bezug auf die Vorne-Hinten-Richtung (FB) des Neigungsfahrzeugs (1) weiter vorne liegt als das vordere Ende (11) des Sitzes (10); und
die Region von Raum (ii) definiert ist durch die Überlappung zwischen:
entweder einer Region (Y2a), die in Bezug auf die Links-Rechts-Richtung (LR) des Neigungsfahrzeugs (1) weiter rechts liegt als das linke Ende des linken Rückspiegels (30a) und weiter links liegt als ein linkes Ende des Messgeräts (20), oder einer Region (Y2b), die in Bezug auf die Links-Rechts-Richtung (LR) des Neigungsfahrzeugs (1) weiter links liegt als das rechte Ende des rechten Rückspiegels (30b) und weiter rechts liegt als ein rechtes Ende des Messgeräts (20); und
der Region (Z), die in Bezug auf die Vorne-Hinten-Richtung (FB) des Neigungsfahrzeugs (1) weiter vorne liegt als das vordere Ende (11) des Sitzes (10), **dadurch gekennzeichnet, dass** der erste Anzeigeabschnitt (41) und der zweite Anzeigeabschnitt (42) durch unterschiedliche Typen von Anzeige ausgebildet sind.

2. Neigungsfahrzeug (1) gemäß Anspruch 1, bei dem,
die Region von Raum (ii) definiert ist durch die Überlappung unter:
entweder der Region (Y2a), die in Bezug auf die Links-Rechts-Richtung (LR) des Neigungsfahrzeugs (1) weiter rechts liegt als das linke Ende des linken Rückspiegels (30a) und weiter links liegt als das linke Ende des Messgeräts (20), oder der Region (Yb2), die in Bezug auf die Links-Rechts-Richtung (LR) des Neigungsfahrzeugs (1) weiter links liegt als das rechte Ende des rechten Rückspiegels (30b) und weiter rechts liegt als das rechte Ende des Messgeräts (20);
der Region (X2), die in Bezug auf die Auf-Ab-Richtung (UD) des Neigungsfahrzeugs (1) weiter oben liegt als das obere Ende des Messgeräts (20); und
der Region (Z), die in Bezug auf die Vorne-Hinten-Richtung (FB) des Neigungsfahrzeugs (1) weiter vorne liegt als das vordere Ende (11) des Sitzes (10).

3. Neigungsfahrzeug (1) gemäß Anspruch 1 oder 2, bei dem
der erste Anzeigeabschnitt (41) und der zweite Anzeigeabschnitt (42) derart angeordnet sind, dass, wenn sich das Neigungsfahrzeug (1) geradeaus bewegt und der Fahrer in der Richtung einer Bewegung des Neigungsfahrzeugs (1) nach vorne blickt, der erste Anzeigeabschnitt (41) und der zweite Anzeigeabschnitt (42) innerhalb eines Bereichs von 50 Grad in dem Sichtfeld des Fahrers liegen, für einen Fahrer mit den folgenden Standardabmessungen: Kopflänge = 20 cm, Höhe von Hals zu Augen = 10 cm, Halslänge = 10 cm, Körperlänge = 55 cm, Oberschenkellänge = 40 cm und Kopfvorwärtswinkel = 5 Grad.

4. Neigungsfahrzeug (1) gemäß einem der Ansprüche 1 bis 3, bei dem
der erste Anzeigeabschnitt (41) und der zweite Anzeigeabschnitt (42) derart angeordnet sind, dass, wenn der Fahrer auf den ersten Anzeigeabschnitt (41) blickt, während er auf dem Sitz sitzt, der zweite Anzeigeabschnitt (42) innerhalb eines Bereichs von 15 Grad in dem Sichtfeld des Fahrers liegt, oder derart, dass, wenn der Fahrer auf den zweiten Anzeigeabschnitt (42) blickt, während er auf dem Sitz sitzt, der erste Anzeigeabschnitt (41) innerhalb eines Bereichs von 15 Grad in dem Sichtfeld des Fahrers liegt, für einen Fahrer mit den folgenden Standardabmessungen: Kopflänge = 20 cm, Höhe von Hals zu Augen = 10 cm, Halslänge = 10 cm, Körperlänge = 55 cm, Oberschenkellänge = 40cm und Kopfvorwärtswinkel = 5 Grad.

5. Neigungsfahrzeug (1) gemäß einem der Ansprüche 1 bis 4, bei dem
die Fahrzeuginformationen Fahrassistenzinformationen für den Fahrer sind, wobei die Fahrassistenzinformationen entweder Informationen über die Beziehung zwischen dem Neigungsfahrzeug selbst und einem weiteren Fahrzeug, Informationen über den Zustand bei Laufenlassen des Neigungsfahrzeugs oder Informationen über die Bedingungen von Teilen des Neigungsfahrzeugs sind.

6. Neigungsfahrzeug (1) gemäß einem der Ansprüche 1 bis 5, bei dem
die zweite Anzeigevisualisierung (42a) die erste Anzeigevisualisierung (41a) ergänzt.

7. Neigungsfahrzeug (1) gemäß Anspruch 6, bei dem
die erste Anzeigevisualisierung (41a) Informationen visuell ausdrückt.

8. Neigungsfahrzeug (1) gemäß Anspruch 7, bei dem
die erste Anzeigevisualisierung (41a) ein Informationsinhalt ist, der in ein Symbol vereinfacht ist.

9. Neigungsfahrzeug (1) gemäß einem der Ansprüche 1 bis 8, bei dem:
die erste Anzeigevisualisierung (41a) ein Piktogramm ist; und
die zweite Anzeigevisualisierung (42a) ein Anzeiger für das Piktogramm ist.

10. Neigungsfahrzeug (1) gemäß einem der Ansprüche 1 bis 9, bei dem
die zweite Anzeigevisualisierung (42a) heller beleuchtet ist als die erste Anzeigevisualisierung (41a).

11. Neigungsfahrzeug (1) gemäß einem der Ansprüche 1 bis 10, bei dem
der erste Anzeigeabschnitt (41) und der zweite Anzeigeabschnitt (42) beide an entweder dem linken Rückspiegel (30a) oder dem rechten Rückspiegel (30b) oder beiden Spiegeln angebracht sind.

12. Neigungsfahrzeug (1) gemäß einem der Ansprüche 1 bis 10, wobei:
das Neigungsfahrzeug (1) ferner eine Windschutzscheibe (35) aufweist; und
der erste Anzeigeabschnitt (41) und der zweite Anzeigeabschnitt (42) an der Windschutzscheibe (35) angebracht sind.

13. Neigungsfahrzeug (1) gemäß einem der Ansprüche 1 bis 10, wobei:
das Neigungsfahrzeug (1) ferner eine Windschutzscheibe (35) aufweist;
der erste Anzeigeabschnitt (41) entweder an dem linken Rückspiegel (30a) oder dem rechten Rückspiegel (30b) oder beiden Spiegeln angebracht ist; und
der zweite Anzeigeabschnitt (42) an der Windschutzscheibe (35) angebracht ist.

14. Neigungsfahrzeug (1) gemäß Anspruch 11 oder 13, bei dem
der erste Anzeigeabschnitt (41) in Bezug auf die Links-Rechts-Richtung (LR) des Neigungsfahrzeugs (1) weiter rechts liegt als der linke Rückspiegel (30a) oder alternativ weiter links liegt als der rechte Rückspiegel (30b).

## Revendications

1. Véhicule inclinable (1) comprenant :
un siège (10) sur lequel s'assoit un conducteur du véhicule inclinable (1) ;
un compteur (20) qui est situé plus vers l'avant qu'une extrémité avant (11) du siège (10) par rapport à une direction avant-arrière (FB) du véhicule inclinable (1), et est configuré pour afficher un état lors du déplacement du véhicule inclinable (1) ;
un rétroviseur gauche (30a) qui est situé plus vers la gauche qu'un centre du véhicule inclinable (1) par rapport à une direction gauche-droite (LR) du véhicule inclinable (1), et est configuré pour permettre au conducteur de voir des endroits derrière le véhicule inclinable (1) par rapport à la direction avant-arrière (FB) du véhicule inclinable (1) ;
un rétroviseur droit (30b) qui est situé plus vers la droite qu'un centre du véhicule inclinable (1) par rapport à la direction gauche-droite (LR) du véhicule inclinable (1), et est configuré pour permettre au conducteur de voir des endroits derrière le véhicule inclinable (1) par rapport à la direction avant-arrière (FB) du véhicule inclinable (1) ;
une première partie d'affichage (41) et une seconde partie d'affichage (42) qui sont toutes les deux situées dans le véhicule inclinable (1), dans une région d'espace (i) ou (ii) telle que définie ci-dessous, de manière à ne pas être visibles depuis une position devant mais à être visibles depuis une position derrière par rapport à la direction avant-arrière (FB) du véhicule inclinable (1), et sont configurées pour afficher une première visualisation d'affichage (41a) et une seconde visualisation d'affichage (42a), respectivement, en même temps pour délivrer un élément d'informations de véhicule en parallèle ;
dans lequel :
la région d'espace (i) est définie par la superposition entre :
une région (X1) qui est plus vers le haut qu'une extrémité supérieure du compteur (20) par rapport à la direction haut-bas (UD) du véhicule inclinable (1) ;
une région qui est une section ou deux sections adjacentes de quatre sections égales (Y1a, Y1b, Y1c, Y1d) en lesquelles une zone (Y1) qui est, par rapport à la direction gauche-droite (LR) du véhicule inclinable (1), plus vers la droite qu'une extrémité gauche du rétroviseur gauche (30a) et plus vers la gauche qu'une extrémité droite du rétroviseur droit (30b) est divisée dans la direction gauche-droite (LR) ; et ;
une région (Z) qui est plus vers l'avant que l'extrémité avant (11) du siège (10) par rapport à la direction avant-arrière (FB) du véhicule inclinable (1) ; et
la région d'espace (ii) est définie par la superposition entre :
soit une région (Y2a) qui est, par rapport à la direction gauche-droite (LR) du véhicule inclinable (1), plus vers la droite que l'extrémité gauche du rétroviseur gauche (30a) et plus vers la gauche qu'une extrémité gauche du compteur (20), soit une région (Y2b) qui est, par rapport à la direction gauche-droite (LR) du véhicule inclinable (1), plus vers la gauche que l'extrémité droite du rétroviseur droit (30b) et plus vers la droite qu'une extrémité droite du compteur (20) ; et
la région (Z) qui est plus vers l'avant que l'extrémité avant (11) du siège (10) par rapport à la direction avant-arrière (FB) du véhicule inclinable (1), **caractérisé en ce que** la première partie d'affichage (41) et la seconde partie d'affichage (42) sont constituées de types différents d'affichages.

2. Véhicule inclinable (1) selon la revendication 1, dans lequel,
la région d'espace (ii) est définie par la superposition entre :
soit la région (Y2a), qui est, par rapport à la direction gauche-droite (LR) du véhicule inclinable (1), plus vers la droite que l'extrémité gauche du rétroviseur gauche (30a) et plus vers la gauche que l'extrémité gauche du compteur (20), soit la région (Y2b) qui est, par rapport à la direction gauche-droite (LR) du véhicule inclinable (1), plus vers la gauche que l'extrémité droite du rétroviseur droit (30b) et plus vers la droite que l'extrémité droite du compteur (20) ;
la région (X2) qui est plus vers le haut que l'extrémité supérieure du compteur (20) par rapport à la direction haut-bas (UD) du véhicule inclinable (1) ; et
la région (Z) qui est plus vers l'avant que l'extrémité avant (11) du siège (10) par rapport à la direction avant-arrière (FB) du véhicule inclinable (1).

3. Véhicule inclinable (1) selon la revendication 1 ou 2, dans lequel
la première partie d'affichage (41) et la seconde partie d'affichage (42) sont situées de telle sorte que, lorsque le véhicule inclinable (1) se déplace droit devant et que le conducteur regarde devant lui dans la direction de déplacement du véhicule inclinable (1), la première partie d'affichage (41) et la seconde partie d'affichage (42) sont dans une plage de 50 degrés dans le champ de vision du conducteur, pour un conducteur présentant les dimensions standard suivantes ; longueur de tête = 20 cm, hauteur du cou aux yeux = 10 cm, longueur de cou = 10 cm, longueur de corps = 55 cm, longueur de cuisses = 40 cm, et angle d'inclinaison de la tête en avant = 5 degrés.

4. Véhicule inclinable (1) selon l'une quelconque des revendications 1 à 3, dans lequel
la première partie d'affichage (41) et la seconde partie d'affichage (42) sont situées de telle sorte que, lorsque le conducteur regarde la première partie d'affichage (41) quand il est assis sur le siège, la seconde partie d'affichage (42) est dans une plage de 15 degrés dans le champ de vision du conducteur ou de telle sorte que, lorsque le conducteur regarde la seconde partie d'affichage (42) quand il est assis sur le siège, la première partie d'affichage (41) est dans une plage de 15 degrés dans le champ de vision du conducteur, pour un conducteur présentant les dimensions standard suivantes ; longueur de tête = 20 cm, hauteur du cou aux yeux = 10 cm, longueur de cou = 10 cm, longueur de corps = 55 cm, longueur de cuisses = 40 cm, et angle d'inclinaison de la tête en avant = 5 degrés.

5. Véhicule inclinable (1) selon l'une quelconque des revendications 1 à 4, dans lequel
les informations de véhicule sont des informations d'aide à la conduite pour le conducteur, dans lequel les informations d'aide à la conduite sont soit des informations concernant la relation entre le véhicule inclinable lui-même et un autre véhicule, soit des informations concernant l'état lors du déplacement du véhicule inclinable, soit des informations concernant les conditions de parties du véhicule inclinable.

6. Véhicule inclinable (1) selon l'une quelconque des revendications 1 à 5, dans lequel
la seconde visualisation d'affichage (42a) complète la première visualisation d'affichage (41a).

7. Véhicule inclinable (1) selon la revendication 6, dans lequel
la première visualisation d'affichage (41a) exprime visuellement des informations.

8. Véhicule inclinable (1) selon la revendication 7, dans lequel
la première visualisation d'affichage (41a) est un contenu d'informations simplifié par un symbole.

9. Véhicule inclinable (1) selon l'une quelconque des revendications 1 à 8, dans lequel :
la première visualisation d'affichage (41a) est un pictogramme ; et
la seconde visualisation d'affichage (42a) est un indicateur pour le pictogramme.

10. Véhicule inclinable (1) selon l'une quelconque des revendications 1 à 9, dans lequel
la seconde visualisation d'affichage (42a) est éclairée plus intensément que la première visualisation d'affichage (41a).

11. Véhicule inclinable (1) selon l'une quelconque des revendications 1 à 10, dans lequel
la première partie d'affichage (41) et la seconde partie d'affichage (42) sont toutes les deux attachées soit au rétroviseur gauche (30a) soit au rétroviseur droit (30b), soit aux deux rétroviseurs.

12. Véhicule inclinable (1) selon l'une quelconque des revendications 1 à 10, dans lequel :
le véhicule inclinable (1) comprend en outre un pare-brise (35) ; et
la première partie d'affichage (41) et la seconde partie d'affichage (42) sont attachées au pare-brise (35).

13. Véhicule inclinable (1) selon l'une quelconque des revendications 1 à 10, dans lequel :
le véhicule inclinable (1) comprend en outre un pare-brise (35) ;
la première partie d'affichage (41) est attachée soit au rétroviseur gauche (30a) soit au rétroviseur droit (30b), soit aux deux rétroviseurs ; et
la seconde partie d'affichage (42) sont attachées au pare-brise (35).

14. Véhicule inclinable (1) selon la revendication 11 ou 13, dans lequel
la première partie d'affichage (41) est située, par rapport à la direction gauche-droite (LR) du véhicule inclinable (1), plus vers la droite que le rétroviseur gauche (30a) ou en variante plus vers la gauche que le rétroviseur droit (30b).
